(19) **Europäisches Patentamt / European Patent Office / Office européen des brevets**

(11) **EP 4 533 696 B1**

(12) **FASCICULE DE BREVET EUROPEEN**

(45) Date de publication et mention de la délivrance du brevet:
**27.05.2026 Bulletin 2026/22**

(21) Numéro de dépôt: **23729776.7**

(22) Date de dépôt: **01.06.2023**

(51) Classification Internationale des Brevets (IPC):
**H04B 10/70** (2013.01)

(52) Classification Coopérative des Brevets (CPC):
**H04B 10/70; H04L 9/0852**

(86) Numéro de dépôt international:
**PCT/EP2023/064671**

(87) Numéro de publication internationale:
**WO 2023/232937 (07.12.2023 Gazette 2023/49)**

(54) **SYSTEME ET PROCEDE DE DETERMINATION DE CLES DE CRYPTAGE UTILISANT L'ENCODAGE DE PHASE D'UN SIGNAL**

SYSTEM UND VERFAHREN ZUR BESTIMMUNG VON VERSCHLÜSSELUNGSSCHLÜSSELN UNTER VERWENDUNG EINES PHASENCODIERSIGNALS

SYSTEM AND METHOD FOR DETERMINING ENCRYPTION KEYS USING A PHASE-ENCODING SIGNAL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **02.06.2022 FR 2205316**

(43) Date de publication de la demande:
**09.04.2025 Bulletin 2025/15**

(73) Titulaire: **THALES**
**92190 Meudon (FR)**

(72) Inventeurs:
- **BERTRAND, Mathieu**
  **31037 TOULOUSE Cedex 1 (FR)**
- **VAN DEN BOSSCHE, Mathias**
  **31120 GOYRANS (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A2- 1 499 040     GB-A- 2 430 124**

**Description**

**Domaine technique**

La présente invention concerne de manière générale le domaine des communications quantiques, et en particulier un système et un procédé de détermination de clés de cryptage quantique.

La détermination de clés de cryptage quantique (ou QKD, acronyme pour l'expression anglo-saxonne correspondante 'Quantum Key Distribution' signifiant 'distribution de clés quantiques' en français) est une technologie de détermination de clés secrètes (encore appelée technologie d'établissement de clés secrètes) entre des utilisateurs distants dans le cadre de communications optiques hautement sécurisées. Cette technologie utilise des protocoles cryptographiques basés sur des lois de la mécanique quantique. En particulier, on distingue la classe des protocoles « prépare et mesure » (P&M, acronyme pour l'expression anglo-saxonne correspondante 'Prepare and Measure') des protocoles basés sur l'intrication quantique.

Dans le domaine de la cryptographie, les utilisateurs distants sont classiquement nommés Alice (dispositif émetteur) et Bob (dispositif récepteur). Un protocole P&M de détermination quantique utilisant un « encodage en phase » comporte une étape d'émission, une étape de réception, et une étape de réconciliation.

La première étape d'émission est effectuée par l'émetteur Alice et consiste à préparer une information quantique (appelé aussi « qubit ») encodée sur la phase d'un signal optique impulsionnel S possédant en moyenne moins d'un photon par impulsion, puis à émettre ce signal S par un canal de transmission quantique. L'émetteur Alice comprend notamment un interféromètre optique composé de deux bras optique asymétriques. L'information quantique est alors un signal quantique (i.e. photon unique) modulé selon une phase $\alpha$ dans un des bras de l'interféromètre de l'émetteur Alice.

Dans la deuxième étape effectuée par le récepteur Bob, une estimation de l'information quantique sur le signal reçu est effectuée. Le récepteur Bob comprend également un interféromètre optique, sensiblement identique à l'interféromètre de l'émetteur Alice. Une modulation de phase $\beta$ (indépendante de $\alpha$) est alors appliquée, au signal quantique reçu, dans un des bras de l'interféromètre du récepteur Bob.

Dans la troisième étape de réconciliation, l'émetteur Alice et le récepteur Bob se communiquent les modulations de phase identiques, c'est-à-dire telles que $\alpha = \beta$, via un canal public authentifié.

Selon ce protocole P&M de détermination de clé quantique qui utilise un encodage en phase, toute fluctuation de phase indésirable générée par l'un ou l'autre des interféromètres du système de distribution de clés de cryptage quantique conduit à des incertitudes de probabilité de mesure des photons uniques en réception et donc à des erreurs sur les qubits mesurés et sur l'établissement de la clé secrète.

Des fluctuations de phase possibles sont des fluctuations de phase aléatoires qui peuvent être d'un ordre thermique, vibrationnel, ou issues de toute autre source de bruit influant sur la qualité du signal se propageant dans chacun des interféromètres. Il en résulte des variations de phase propres à chacun des interféromètres optiques du système qui ne peuvent pas être parfaitement identiques.

D'autres fluctuations de phase possibles sont des fluctuations de phase déterministes présent dans des systèmes comprenant un émetteur Alice et un récepteur Bob en mouvement relatif l'un par rapport à l'autre. Elles induisent des variations de phase dues au changement de la géométrie de transmission du signal au cours du temps, comme décrit dans l'article "Interference at the Single Photon Level Along Satellite-Ground Channels" de G. Vallone et al. 2016, Phys. Rev. Lett. 116, 253601.

Pour résoudre les problèmes de fluctuations de phase aléatoires, les systèmes de détermination de clés de cryptage quantique connus utilisent deux solutions distinctes. La première solution consiste à effectuer une stabilisation passive des interféromètres optiques, en les isolant thermiquement et en les plaçant dans un environnement dépourvu de vibrations, comme décrit dans l'article "Gigahertz decoy quantum key distribution with 1 Mbit/s secure key rate" de A. R. Dixon et al. 2008, Optics Express Vol. 16, Issue 23, pp. 18790-18797. Cette solution, bien qu'efficace pour les applications en environnements contrôlés selon une communication fibrée au sol, n'est pas adaptée aux applications ayant des conditions extrêmes d'utilisation. En particulier dans le domaine spatial, dans lequel au moins un des utilisateurs distants est un satellite, cette solution implique l'utilisation d'une boucle d'asservissement à bord du satellite, augmentant ainsi les facteurs de coût, de poids et de puissance de sa charge utile.

La seconde solution consiste à effectuer un multiplexage temporel du signal quantique avec un signal de contrôle impulsionnel possédant un grand nombre de photons, comme décrit dans l'article "10-Mb/s Quantum Key Distribution" de Z. Yuan et al. 2018, Journal of Lightwave Technology, Volume:36 Issue:16. Cette solution entraîne une réduction du débit d'informations quantiques transmises et nécessite l'utilisation d'une électronique de compensation en temps réel qui peut se révéler difficile à mettre en place. De plus, le phénomène d'atténuation en intensité des impulsions du signal de contrôle, dû à des variations du taux de transmission atmosphérique, pourrait être interprétée comme une baisse de contraste engendrée par les fluctuations de phase dans les interféromètres, et conduire ainsi à une correction erronée des fluctuations de phase.

D'autres exemples de systèmes de détermination de clés de cryptage quantique sont proposés dans les

**EP 4 533 696 B1**

documents EP 1 499 040 A2 et GB 2 430 124 A.

Les systèmes de détermination de clés de cryptage quantique existants ne sont ainsi pas capables de résoudre les problèmes de fluctuations de phase déterministes.

Il existe ainsi un besoin pour un système et un procédé de détermination de clés de cryptage quantique amélioré, qui soit notamment capable de corriger les fluctuations de phase aléatoires induites par les interféromètres servant à l'encodage et au décodage de la phase, ainsi que les fluctuations de phase déterministes présentes lorsque le transmetteur et le récepteur sont en mouvement l'un par rapport à l'autre.

## Résumé de l'invention

La présente invention vient améliorer la situation en proposant un émetteur (Alice) configuré pour transmettre un signal interférométrique encodé $S_2$ à travers un canal de transmission, l'émetteur comprenant un module de génération de signal configuré pour générer un signal quantique intermédiaire $|\Psi_1\rangle$ et un signal de contrôle intermédiaire $S_c$, le module de génération de signal étant en outre configuré pour effectuer un décalage fréquentiel $\Delta\omega$ entre le signal quantique intermédiaire $|\Psi_1\rangle$ et le signal de contrôle intermédiaire $S_c$. L'émetteur comprend également un module interférométrique d'encodage configuré pour recevoir le signal quantique intermédiaire $|\Psi_1\rangle$ et le signal de contrôle intermédiaire $S_c$, et pour déterminer le signal interférométrique encodé $S_2$ comprenant un signal quantique interférométrique encodé $|\Psi_A\rangle$ et un signal de contrôle interférométrique $S_{cA}$ à partir du signal quantique intermédiaire $|\Psi_1\rangle$ et du signal de contrôle intermédiaire $S_c$ parcourant un chemin optique sensiblement similaire, le module interférométrique d'encodage comprenant un dispositif d'encodage configuré pour appliquer une modulation de phase $\alpha$ uniquement à une composante du signal quantique intermédiaire $|\Psi_1\rangle$.

Dans des modes de réalisation, le module interférométrique d'encodage peut être implémenté sous la forme d'un interféromètre optique asymétrique comprenant un premier bras interférométrique et un deuxième bras interférométrique, le premier bras interférométrique étant plus court que le deuxième bras interférométrique. Le dispositif d'encodage peut alors comprendre au moins une unité de séparation fréquentielle positionnée sur le deuxième bras interférométrique, l'unité de séparation fréquentielle étant configurée pour effectuer un découplage fréquentiel du signal quantique intermédiaire $|\Psi_1\rangle$ et du signal de contrôle intermédiaire $S_c$.

Avantageusement, le module de génération de signal peut comprendre en outre une unité de décalage temporel configurée pour décaler temporellement le signal quantique intermédiaire $|\Psi_1\rangle$ et le signal de contrôle intermédiaire $S_c$.

La présente invention propose de plus un récepteur (Bob) configuré pour recevoir un signal quantique interférométrique encodé $|\Psi_A\rangle$ et un signal de contrôle interférométrique $S_{cA}$ à travers un canal de transmission, le récepteur comprenant un module interférométrique de transcodage configuré pour générer un signal quantique interférométrique transcodé $|\Psi_B\rangle$ et un signal de contrôle interférométrique modulé en phase $S_{cB}$ à partir du signal quantique interférométrique encodé $|\Psi_A\rangle$ et du signal de contrôle interférométrique $S_{cA}$ parcourant un chemin optique sensiblement similaire, le module interférométrique de transcodage comprenant un dispositif de transcodage et de modulation de phase configuré pour appliquer une modulation de phase $\beta_{eff}$ uniquement à une composante du signal quantique interférométrique encodé $|\Psi_A\rangle$ et une modulation de phase $\varphi_m$ uniquement à une composante du signal de contrôle interférométrique $S_{cA}$. Le récepteur comprend également un module de traitement configuré pour effectuer au moins une mesure du signal quantique interférométrique transcodé $|\Psi_B\rangle$ et au moins une mesure du signal de contrôle interférométrique modulé en phase $S_{cB}$, le module de traitement étant en outre configuré pour déterminer la modulation de phase $\beta_{eff}$ à partir de la modulation de phase $\varphi_m$ et de la au moins une mesure interférométrique du signal de contrôle interférométrique modulé en phase $S_{cB}$.

Dans des modes de réalisation, le module interférométrique de transcodage peut être implémenté sous la forme d'un interféromètre optique asymétrique comprenant un premier bras interférométrique et un deuxième bras interférométrique, le premier bras interférométrique étant plus court que le deuxième bras interférométrique. Le dispositif de transcodage et de modulation de phase peut alors comprendre au moins une unité de séparation fréquentielle positionnée sur le deuxième bras interférométrique, l'unité de séparation fréquentielle étant configurée pour effectuer un découplage fréquentiel du signal quantique interférométrique encodé $|\Psi_A\rangle$ et du signal de contrôle interférométrique $S_{cA}$.

Avantageusement, le module interférométrique de transcodage peuvent comprendre deux chemins optiques en sortie de l'interféromètre, et le module de traitement peut comprendre deux parties de traitement, chaque partie de traitement comprenant une unité de séparation fréquentielle et étant configurée pour effectuer une mesure parmi la au moins une mesure du signal quantique interférométrique transcodé $|\Psi_B\rangle$ et une mesure parmi la au moins une mesure du signal de contrôle interférométrique modulé en phase $S_{cB}$, provenant des deux chemins optiques.

Les modes de réalisation de l'invention fournissent ainsi un système de détermination de clé de cryptage quantique comprenant un émetteur (Alice) et un récepteur (Bob).

Il est en outre proposé un procédé d'émission d'un signal interférométrique encodé $S_2$, mis en œuvre par l'émetteur (Alice), le procédé comprenant les étapes consistant à :

- générer un signal quantique intermédiaire $|\Psi_1\rangle$ de fréquence $\omega_q$ et un signal de contrôle intermédiaire $S_c$ de fréquence $\omega_c$ ayant un décalage fréquentiel égal à

$$\omega_q - \omega_c$$

- appliquer une modulation de phase $\alpha$ uniquement à une composante du signal quantique intermédiaire $|\Psi_1\rangle$ passant à travers un interféromètre, le signal quantique intermédiaire $|\Psi_1\rangle$ et le signal de contrôle intermédiaire $S_c$ parcourant un chemin optique sensiblement similaire pour générer un signal interférométrique encodé $S_2$ comprenant un signal quantique interférométrique encodé $|\Psi_A\rangle$ et un signal de contrôle interférométrique $S_{cA}$,

- générer un signal interférométrique encodé $S_2$ comprenant le signal quantique interférométrique encodé $|\Psi_A\rangle$ et le signal de contrôle interférométrique $S_{cA}$.

Le procédé d'émission comprend en outre une étape consistant à appliquer un retard temporel entre le signal quantique intermédiaire $|\Psi_1\rangle$ et le signal de contrôle intermédiaire $S_c$.

Il est également proposé un procédé de réception d'un signal quantique interférométrique encodé $|\Psi_A\rangle$ et d'un signal de contrôle interférométrique $S_{cA}$, mis en œuvre par le récepteur (Bob), le procédé comprenant les étapes consistant à :

- appliquer une modulation de phase $\varphi_m$ à la composante du signal de contrôle interférométrique $S_{cA}$ et générer un signal de contrôle interférométrique modulé en phase $S_{cB}$,

- effectuer au moins une mesure du signal de contrôle interférométrique modulé en phase $S_{cB}$,

- déterminer une modulation de phase $\beta_{eff}$ à partir de la modulation de phase $\varphi_m$ et de la mesure du signal de contrôle interférométrique modulé en phase $S_{cB}$,

- appliquer la modulation de phase $\beta_{eff}$ à la composante du signal quantique interférométrique encodé $|\Psi_A\rangle$ et générer un signal quantique interférométrique transcodé $|\Psi_B\rangle$, le signal quantique interférométrique encodé $|\Psi_A\rangle$ et le signal de contrôle interférométrique $S_{cA}$ parcourant un chemin optique sensiblement similaire,

- effectuer au moins une mesure du signal quantique interférométrique transcodé $|\Psi_B\rangle$.

Le système et le procédé d'établissement de clés de cryptage quantique selon les modes de réalisation de l'invention permettent de corriger les fluctuations de phase aléatoires induites par les interféromètres servant à l'encodage et au décodage de la phase et les fluctuations de phase déterministes présentes lorsque le transmetteur et le récepteur sont en mouvement l'un par rapport à l'autre, afin d'établir la clé quantique.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un système de détermination de clés de cryptage quantique, selon des modes de réalisation de l'invention.

[Fig.2] La figure 2 est un schéma représentant un module de génération de signal d'un émetteur, selon des modes de réalisation de l'invention.

[Fig.3] La figure 3 est un schéma représentant un module interférométrique d'encodage d'un émetteur, selon des modes de réalisation de l'invention.

[Fig.4] La figure 4 est un schéma représentant un module interférométrique de transcodage d'un récepteur, selon des modes de réalisation de l'invention.

[Fig.5] La figure 5 est un schéma représentant un module de traitement d'un récepteur, selon des modes de réalisation de l'invention.

[Fig.6] La figure 6 est un schéma représentant une unité de correction du module de traitement d'un récepteur, selon des modes de réalisation de l'invention.

[Fig.7] La figure 7 est un organigramme représentant un procédé de détermination de clés de cryptage quantique réalisé par un émetteur, selon des modes de réalisation de l'invention.

[Fig.8] La figure 8 est un organigramme représentant un procédé de détermination de clés de cryptage quantique réalisé par un récepteur, selon des modes de réalisation de l'invention.

Des références identiques sont utilisées dans les figures pour désigner des éléments identiques ou analogues. Pour des raisons de clarté, les éléments représentés ne sont pas à l'échelle.

## Description détaillée

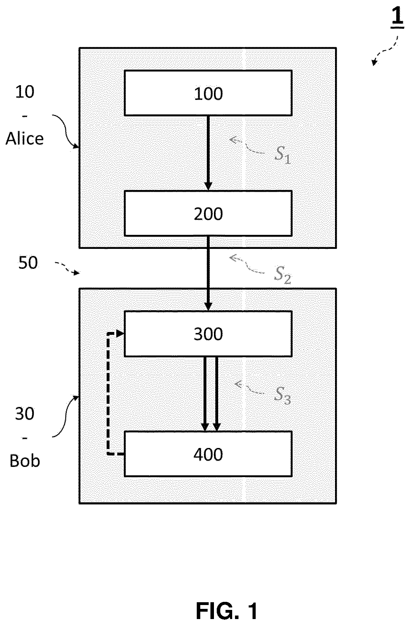

La figure 1 représente schématiquement un système de détermination de clés de cryptage quantique 1 comprenant deux dispositifs 10 et 30 communiquant entre eux. Les deux dispositifs comprennent un émetteur 10, encore appelé 'Alice', et un récepteur 30, encore appelé 'Bob'.

Le système de détermination de clés de cryptage quantique 1 peut être utilisé par exemple dans le domaine spatial, lorsque l'émetteur Alice (ou réciproquement le récepteur Bob) est monté à bord d'un satellite et que le récepteur Bob (ou réciproquement l'émetteur Alice) est un module terrestre. Le système de détermination de clés de cryptage quantique 1 peut en outre être utilisé dans une application de l'invention où l'un des dispositifs ou les deux dispositifs Alice et Bob sont des modules avioniques. Selon des modes de réalisation, le système de détermination de clés de cryptage quantique 1 peut également être utilisé dans une application de l'invention où l'un des dispositifs ou les deux dispositifs Alice et Bob sont des modules pour fibres optiques intégrés dans des réseaux au sol.

Un dispositif Alice et/ou Bob peut être fixe ou en mouvement par rapport à l'autre dispositif communiquant.

L'émetteur Alice comprend un module de génération de signal 100 et un module interférométrique d'encodage 200. Le récepteur Bob comprend un module interférométrique de transcodage 300 et un module de traitement 400. Avantageusement, l'émetteur Alice et le récepteur Bob sont des dispositifs tout-optique fibrés.

Tel qu'utilisé ici, un 'signal' ou 'signal optique' fait référence à une impulsion de lumière cohérente issue par exemple d'un faisceau laser. Un faisceau laser peut notamment être caractérisé par sa cadence d'impulsions f et par une impulsion laser (i.e. le signal) définie par son intensité I, sa phase et sa fréquence $\omega$. La 'fréquence $\omega$' du faisceau laser désigne la 'fréquence optique de l'impulsion laser multipliée par $2\pi$' définie en fonction de la longueur d'onde du faisceau $\lambda$, telle que $\lambda \times \frac{\omega}{2\pi} = c$, c désignant la vitesse de la lumière.

Un 'signal quantique' fait référence à un signal optique ayant en moyenne moins d'un photon par impulsion. La mesure d'un signal quantique fournit une mesure de détection d'un photon dépendant d'une « probabilité de détection » de ce photon.

Tel qu'utilisé ici, un 'encodage' fait référence à une ou plusieurs opérations consistant à générer une représentation d'informations suivant un certain code. Par exemple et sans limitation, un encodage peut comprendre l'application d'une première modulation de phase à un signal quantique.

Un 'transcodage' fait référence à une ou plusieurs opérations consistant à transformer une représentation d'informations suivant un certain code en une autre représentation selon un autre code différent. Par exemple et sans limitation, un transcodage peut comprendre l'application d'une deuxième modulation de phase à signal quantique modulé en phase.

L'émetteur Alice est configuré pour générer et transmettre, à travers un canal de transmission 50 (encore appelé 'canal quantique'), un signal encodé.

Le canal de transmission 50 peut être par exemple un espace libre ou un dispositif fibré de transport d'informations, en fonction de l'application de l'invention. Le canal de transmission 50 peut comprendre un dispositif espion, appelé 'Eve' (non représenté sur les figures), configuré pour intercepter le signal transmis par l'émetteur Alice.

Le module interférométrique d'encodage 200 de l'émetteur Alice et le module interférométrique de transcodage 300 du récepteur Bob peuvent avoir des architectures sensiblement identiques. Un module interférométrique comprend un interféromètre, l'interféromètre comprenant un premier bras interférométrique et un deuxième bras interférométrique.

Dans des modes de réalisation, le premier bras interférométrique du module interférométrique d'encodage 200 et le premier bras interférométrique du module interférométrique de transcodage 300 ne comprennent pas d'élément optique capable de modifier la phase d'un signal qui le traverse. En outre, le premier bras interférométrique du module interférométrique d'encodage 200 et le premier bras interférométrique du module interférométrique de transcodage 300 peuvent ne pas comprendre de fluctuation de phase, induisant de décalage de phase à un signal qui les traverse, et sont qualifiés de « bras de référence ». Dans ces modes de réalisation, le deuxième bras interférométrique du module interférométrique d'encodage 200 et le deuxième bras interférométrique du module interférométrique de transcodage 300 comprennent chacun un ou plusieurs éléments optiques et peuvent être configurés pour modifier la phase de un ou de plusieurs signaux qui les traverse. En outre, le deuxième bras interférométrique du module interférométrique d'encodage 200 peut comprendre des fluctuations de phase induisant un décalage de phase, noté $\varphi_A$, à tout signal qui le traverse. Par ailleurs, le deuxième bras interférométrique du module interférométrique de transcodage 300 peut comprendre des fluctuations de phase induisant un décalage de phase, noté $\varphi_B$, à tout signal qui le traverse.

Le récepteur Bob est configuré pour recevoir le signal encodé du canal de transmission 50, transmis par l'émetteur Alice, et effectuer une estimation du signal reçu (ce qui fournit un signal reçu estimé). Le récepteur Bob est en outre configuré pour déterminer et effectuer une correction différentielle des fluctuations de phase entre les décalages de phase $\varphi_A$ et $\varphi_B$ induits respectivement sur le signal encodé et sur le signal reçu estimé par les modules interférométriques compris dans le système de détermination de clés de cryptage quantique 1.

Par ailleurs, l'émetteur Alice et le récepteur Bob sont configurés pour déterminer (i.e. établir) une clé de cryptage quantique, en utilisant le signal encodé et le signal reçu estimé.

Le module de génération de signal 100 de l'émetteur Alice est configuré pour générer, à partir d'un signal initial noté $S_0$ de fréquence $\omega_0$ et d'intensité $I_0$, un signal intermédiaire noté $S_1$ comprenant :

- un signal quantique intermédiaire notée $S_q$ (ou selon la notation d'état quantique $|\Psi_1\rangle$) de fréquence $\omega_q$ et d'intensité $I_q$, et

- un signal de contrôle intermédiaire notée $S_c$ de fréquence $\omega_c$ et d'intensité $I_c$.

En particulier, le module de génération de signal 100 de l'émetteur Alice est configuré pour produire un décalage fréquentiel noté $\Delta\omega$ entre le signal quantique intermédiaire $|\Psi_1\rangle$ et le signal de contrôle intermédiaire $S_c$, le décalage fréquentiel $\Delta\omega$ pouvant être défini selon l'équation (01) suivante :

$$\Delta\omega = \omega_q - \omega_c \qquad\qquad (01)$$

Le module interférométrique d'encodage 200 de l'émetteur Alice est configuré pour générer, à partir du signal intermédiaire $S_1$, un signal interférométrique encodé noté $S_2$ comprenant :

- un signal quantique interférométrique encodé noté $|\Psi_A\rangle$, et

- un signal de contrôle interférométrique noté $S_{cA}$.

En particulier, le module interférométrique d'encodage 200 de l'émetteur Alice peut comprendre une unité de séparation fréquentielle positionnée sur le deuxième bras interférométrique du module interférométrique d'encodage 200. Une composante du signal quantique intermédiaire $|\Psi_1\rangle$ et une composante du signal de contrôle intermédiaire $S_c$ traversent le deuxième bras interférométrique du module interférométrique d'encodage 200. L'unité de séparation fréquentielle du module interférométrique d'encodage est alors configurée pour séparer (i.e. sélectionner fréquentiellement) la composante du signal quantique intermédiaire $|\Psi_1\rangle$ de la composante du signal de contrôle intermédiaire $S_c$ selon le décalage fréquentiel $\Delta\omega$. Le module interférométrique d'encodage 200 est alors configuré pour appliquer une modulation de phase $\alpha$, permettant l'encodage d'une clé de cryptage quantique, à la composante du signal quantique intermédiaire $|\Psi_1\rangle$ traversant le deuxième bras interférométrique du module interférométrique d'encodage 200.

Le module interférométrique de transcodage 300 du récepteur Bob est configuré pour générer, à partir du signal interférométrique encodé $S_2$, un signal interférométrique transcodé $S_3$ comprenant :

- un signal quantique interférométrique transcodé noté $|\Psi_B\rangle$, et

- un signal de contrôle interférométrique modulé en phase noté $S_{cB}$.

L'homme du métier comprendra que le module interférométrique de transcodage 300 du récepteur Bob est configuré pour :

- projeter le signal quantique interférométrique encodé $|\Psi_A\rangle$ sur un état quantique interférométrique transcodé noté $|\Psi_{B+}\rangle$ sur un « premier port de sortie » de l'interféromètre du module 300, et sur l'état quantique interférométrique transcodé noté $|\Psi_{B-}\rangle$ sur un « second port de sortie » de l'interféromètre du module 300, et

- pour générer un signal de contrôle interférométrique modulé en phase noté $S_{cB}$.

En particulier, le module interférométrique de transcodage 300 du récepteur Bob peut comprendre une unité de séparation fréquentielle positionnée sur le deuxième bras interférométrique du module interférométrique de transcodage 300. Une composante du signal quantique interférométrique encodée $|\Psi_A\rangle$ et une composante du signal de contrôle interférométrique $S_{cA}$ traversant le deuxième bras interférométrique du module interférométrique de transcodage 300. L'unité de séparation fréquentielle du module interférométrique de transcodage et alors configurée pour séparer (i.e. sélectionner fréquentiellement) la composante du signal quantique interférométrique encodée $|\Psi_A\rangle$ de la composante du signal de contrôle interférométrique $S_{cA}$. Le module interférométrique de transcodage 300 est alors configuré pour appliquer une modulation de phase $\beta_{eff}$, permettant de transcoder la clé de cryptage quantique, et une modulation de phase $\varphi_m$, respectivement, à la composante de signal quantique interférométrique encodé $|\Psi_A\rangle$ et à la composante de signal de contrôle interférométrique $S_{cA}$ traversant le deuxième bras interférométrique du module interférométrique de transcodage 300.

Le module de traitement 400 du récepteur Bob est configuré pour :

- mesurer le signal de contrôle modulé en phase $S_{cB}$ issu du module interférométrique de transcodage 300,

- déterminer une correction différentielle $\varepsilon$ des fluctuations de phase entre les décalages de phase $\varphi_A$ et $\varphi_B$ (ou signal d'erreur discret $\varepsilon$) à partir de la mesure du signal de contrôle modulé en phase $S_{cB}$ et de la modulation de phase $\varphi_m$,

- déterminer la ou les valeurs de la modulation de phase $\beta_{eff}$ à partir de la correction différentielle $\varepsilon$ et d'une modulation de phase $\beta$, et transmettre la ou les valeurs de la modulation de phase $\beta_{eff}$ au module interférométrique de transcodage 300, et

- estimer le signal quantique interférométrique transcodé $|\Psi_B\rangle$, (c'est-à-dire, estimer la projection du signal quantique interférométrique encodé $|\Psi_A\rangle$ sur les états quantiques interférométriques transcodés $|\Psi_{B+}\rangle$ et $|\Psi_{B-}\rangle$).

Il est à noter que, dans ces modes de réalisation, le signal de contrôle interférométrique $S_{cA}$ n'est pas modulé par le module interférométrique d'encodage 200 de l'émetteur Alice alors qu'une composante du signal de contrôle interférométrique $S_{cB}$ est modulée en phase dans le module interférométrique de transcodage 300 du récepteur Bob. Cette configuration permet au module de traitement 400 de déterminer la correction différentielle les fluctuations de phase entre les décalages de phase $\varphi_A$ et $\varphi_B$ des modules interférométriques de l'émetteur Alice et du récepteur Bob, sans compromettre la sécurité de la clé secrète établie (c'est-à-dire sans modifier la modulation de phase $\alpha$), et ainsi de déduire la modulation de phase $\beta_{eff}$ par une rétroaction électronique rapide.

Similairement, une composante de chacun des signaux quantiques interférométrique $|\Psi_A\rangle$ et $|\Psi_B\rangle$, est modulée en phase respectivement dans l'un des deux bras interférométriques du module interférométrique d'encodage 200, ainsi que dans l'un des deux bras interférométrique du module interférométrique de transcodage 300. Cette double modulation $\alpha$ et $\beta$ permet à l'émetteur Alice et au récepteur Bob de produire la ou les informations nécessaires à l'établissement d'une clé de cryptage sécurisée.

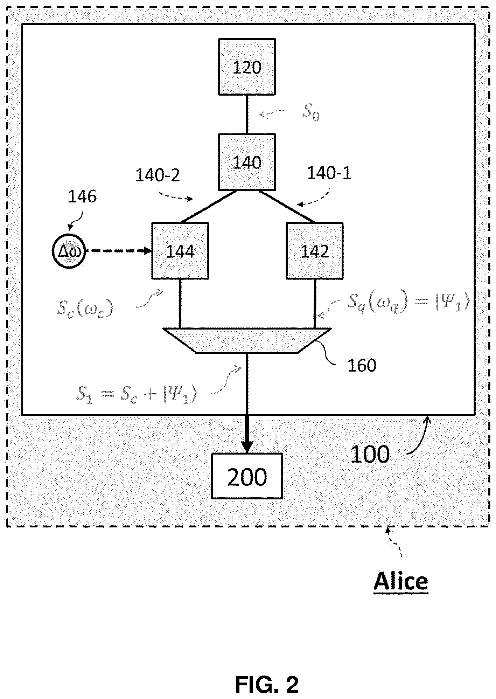

La figure 2 représente schématiquement le module de génération de signal 100 de l'émetteur Alice, selon des modes de réalisation de l'invention.

Le module de génération de signal 100 comprend une unité laser 120, une unité de séparation de faisceau 140, et une unité de recombinaison de faisceau 160.

Dans des modes de réalisation, l'unité laser 120 peut comprendre un laser de transmission émettant un faisceau laser ayant une fréquence $\omega_0$ (équivalent à une longueur d'onde $\lambda_0$) et caractérisé par une longueur de cohérence noté $L_c$.

La longueur d'onde $\lambda_0$ d'émission du laser peut se situer dans le visible ou l'infrarouge. Par exemple et de façon non limitative, l'unité laser 120 peut comprendre une diode laser DFB (acronyme pour l'expression anglo-saxonne correspondante 'Distributed Feedback', signifiant à rétroaction distribuée) utilisant un réseau de Bragg permettant de choisir la longueur d'onde d'émission $\lambda_0$. La longueur d'onde $\lambda_0$ d'émission choisie de la diode laser peut être égale à 1550 nm. Une telle diode laser émet notamment un faisceau laser continue. Alternativement, l'unité laser 120 peut comprendre une source laser impulsionnel.

Ainsi, dans des modes de réalisation, l'unité laser 120 peut comprendre en outre une unité de modulation d'intensité (non représenté sur les figures) permettant de générer, à partir d'un faisceau laser continu (ou impulsionnel), des impulsions laser définies selon une cadence d'impulsions $f_0$ et une intensité d'impulsions $I_0$, et une largeur temporelle d'impulsion $\tau_0$ allant jusqu'à quelques nanosecondes. La cadence $f_0$ du train d'impulsions peut être de l'ordre de quelques kilohertz jusqu'à quelques dizaines de gigahertz.

Le faisceau laser peut être polarisé selon toute polarisation adaptée. Par exemple, le faisceau laser peut être polarisé linéairement.

Par conséquent, l'unité laser 120 peut être configurée pour générer un signal initial $S_0$ pouvant être défini selon l'équation (02) suivante :

$$S_0 = s_0 \times e^{i\omega_0 t} \text{, tel que } I_0 \propto s_0{}^2 \qquad\qquad (02)$$

L'unité de séparation de faisceau 140 est configurée pour séparer le faisceau laser transmis par l'unité laser 120 en deux composantes du signal initial (notées par exemple $S_{0-1}$ et $S_{0-2}$) parcourant deux voies optiques distinctes 140-1 et 140-2.

Dans des modes de réalisation, l'unité de séparation de faisceau 140 peut être un coupleur optique (par exemple en Y fibré) à maintien de polarisation, typiquement disposé en sortie de l'unité laser 120. L'unité de séparation de faisceau 140 peut en outre être asymétrique, de manière à fournir une composante du signal initial (par exemple $S_{0-1}$) composée d'impulsions à faible intensité parcourant la voie optique 140-1 et une composante du signal initial (par exemple $S_{0-2}$) composée d'impulsions de forte intensité parcourant la voie optique 140-2. Avantageusement, le coupleur est du type 90/10, c'est-à-dire délivrant 90% de la puissance optique pour la composante $S_{0-2}$ du signal initial parcourant la voie optique 140-2 et 10% de la puissance optique pour la composante $S_{0-1}$ du signal initial parcourant la voie optique 140-1. L'unité de séparation de faisceau 140 peut ainsi générer les deux composantes de signal $S_{0-1}$ et $S_{0-2}$. Les composantes de signal $S_{0-1}$ et $S_{0-2}$ peuvent être définies selon les équations (03) et (04) suivantes :

$$S_{0-1} = \sqrt{t} \times S_0 \text{, tel que par exemple } t = 90\% \text{ et} \qquad\qquad (03)$$

$$S_{0-2} = \sqrt{1-t} \times S_0 \qquad\qquad (04)$$

Le module de génération de signal 100 comprend en outre une unité 142 configurée pour générer un 'signal quantique' à partir de la composante $S_{0-1}$ du signal initial parcourant la voie optique 140-1.

Dans les modes de réalisation de l'invention, l'unité de génération de signal quantique 142 peut être un atténuateur optique permettant de former le signal quantique ayant une amplitude $I_q$ équivalent en moyenne à moins d'un photon par impulsion. L'unité de génération de signal quantique 142 est ainsi configurée pour générer le signal quantique $S_q(I_q, w_0)$ appelé signal quantique intermédiaire et désigné également selon la notation d'état quantique $|\Psi_1\rangle$.

Par ailleurs, l'unité de génération de signal quantique 142 peut comprendre une autre unité de modulation d'intensité (non représentée sur les figures) configurée pour effectuer une modulation additionnelle d'impulsion du signal quantique et/ou de la composante $S_{0-1}$ du signal initial parcourant la voie optique 140-1. Par exemple, une telle unité peut être utilisée pour implémenter un protocole appliquant des états leurres quantiques.

Dans certains modes de réalisation, en particulier si l'unité laser 120 comprend une source laser continue, l'unité de génération de signal quantique 142 peut également comprendre une unité de modification de phase (non représentée sur les figures) configurée pour modifier la phase de chacune des impulsions quantiques parcourant la voie optique 140-1. Avantageusement, l'unité de modification de phase peut être configurée pour rendre aléatoire (i.e. randomiser) la phase de chacune de ces impulsions quantiques, de manière à ce que les phases de deux impulsions quantiques consécutives soient indépendantes l'une par rapport à l'autre. Il est à noter que la randomisation de phase peut permettre de se prémunir de certaines attaques de la clé quantique, pouvant être effectuées par un dispositif espion, appelé 'Eve', disposé sur le canal de transmission 50 interceptant le signal de contrôle transmis par l'émetteur Alice et prenant en compte la cohérence de phase entre impulsions. Une telle unité de modification de phase peut être par exemple un modulateur de phase.

Le module de génération de signal 100 comprend en outre une unité 144 configurée pour générer un 'signal de contrôle' à partir de la composante $S_{0-2}$ du signal initial parcourant la voie optique 140-2.

Dans des modes de réalisation de l'invention, l'unité de génération de signal de contrôle 144 peut être une unité de décalage en fréquence configurée pour former le signal de contrôle ayant une fréquence $\omega_c$ décalée par rapport à la fréquence $\omega_0$ du signal initial et de la composante $S_{0-2}$ du signal initial parcourant la voie optique 140-2, selon un décalage $\Delta\omega = \omega_0 - \omega_c$. L'unité de génération de signal de contrôle 141 génère alors un signal $S_c(I_c, \omega_c)$, appelé signal de contrôle intermédiaire et pouvant être défini selon l'équation (05) suivante :

$$S_c(\omega_c) = s_c \times e^{i(\omega_s - \Delta\omega)t} = s_c \times e^{i\omega_c t} \text{, tel que } s_c = \sqrt{t} \times s_0 \qquad\qquad (05)$$

L'unité de génération de signal de contrôle 144 peut être par exemple un modulateur acousto-optique (AOM, acronyme pour l'expression anglo-saxonne 'acousto-optic modulator') ou un dispositif de décalage de fréquence acousto-optique (AOFS acronyme pour l'expression anglo-saxonne 'acousto-optic frequency shifters') ou un modulateur de phase. Le module de génération de signal 100 peut ainsi comprendre, par exemple et sans limitation, un générateur de tension 146 permettant de contrôler le décalage $\Delta\omega$. Il est à noter que le décalage $\Delta\omega$ à appliquer est choisi de manière à obtenir un découplage spectral entre le signal de contrôle intermédiaire $S_c$ et le signal quantique intermédiaire $|\Psi_1\rangle$ adapté, afin d'éviter que le dispositif espion 'Eve' disposé sur le canal de transmission 50 interceptant le signal de contrôle transmis par l'émetteur Alice, puisse en déduire les fluctuations de phase à corriger et ainsi les qubits transmis. Selon un exemple non limitatif, pour une longueur d'onde $\lambda_0$ d'émission choisie égale à 1550 nm, un décalage $\Delta\omega$ entre 1 GHz et 130 GHz peut permettre une variation de quelques picomètres à 1 nm entre la longueur d'onde du signal de contrôle intermédiaire $S_c$ et la longueur d'onde du signal quantique intermédiaire $|\Psi_1\rangle$.

Dans certains modes de réalisation, l'unité de génération de signal de contrôle 144 (ou l'unité de génération de signal quantique 142) peut comprendre en outre une unité de décalage temporel (non représentée sur les figures) configurée pour décaler temporellement les composantes de faisceaux entre elles. La composante portée par la voie optique 140-1 (i.e. le signal quantique $|\Psi_1\rangle$) peut être retardée d'une durée $\Delta\tau$ par rapport à la composante de faisceaux portée par la voie optique 140-2 (i.e. le signal de contrôle $S_c$). Cette durée $\Delta\tau$ peut être définie par exemple en fonction de la cadence d'impulsions $f_s$ du faisceau et/ou de la largeur temporelle $\tau_s$ d'impulsion, telles que $\frac{1}{f_s} > \Delta\tau > \tau_s$. Cette durée $\Delta\tau$ peut aussi être définie en fonction de la durée $\tau_r$ de mise en œuvre de la rétroaction électronique pour pouvoir déduire au sein de l'émetteur Bob la modulation de phase $\beta_{eff}$ et corriger les fluctuations de phase, telles que $\Delta\tau < \tau_r$.

L'unité de recombinaison de faisceau 160, en extrémité des deux voies optiques distinctes 140-1 et 140-2, permet de recombiner les deux composantes de signaux sur un unique chemin optique en un signal intermédiaire $S_1$ transmis au module interférométrique d'encodage 200 et pouvant être défini selon l'équation (06) suivante :

$$S_1 = S_c + |\Psi_1\rangle \qquad\qquad (06)$$

L'unité de recombinaison fréquentielle 160 du signal quantique avec le signal de contrôle peut être par exemple, et en fonction des modes de réalisation utilisés, un multiplexeur de fréquence (communément noté MUX) dont la technologie dépend du décalage fréquentiel $\Delta\omega$ entre le signal de contrôle intermédiaire $S_2$ et le signal quantique intermédiaire $|\Psi_1\rangle$.

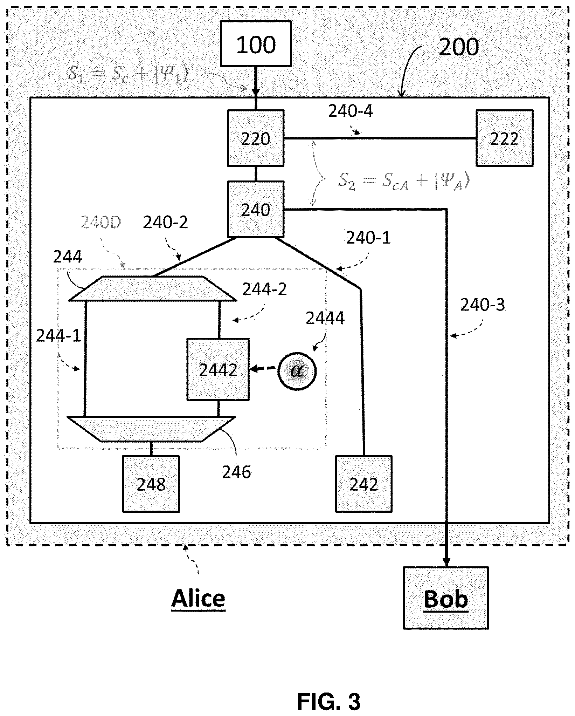

La figure 3 représente schématiquement un module interférométrique d'encodage 200 de l'émetteur Alice, selon des modes de réalisation de l'invention.

Le module interférométrique d'encodage 200 comprend un séparateur de faisceau 240 configuré pour séparer le signal intermédiaire $S_1$ transmis en deux composantes de faisceaux, notées par exemple $S_{1-1}$ et $S_{1-2}$, parcourant chacune un premier bras interférométrique noté 240-1 ou un deuxième bras interférométrique noté 240-2. Le signal intermédiaire $S_1$ comprend le signal de contrôle intermédiaire $S_2$ et le signal quantique intermédiaire $|\Psi_1\rangle$ et chacune des composantes $S_{1-1}$ et $S_{1-2}$ du signal intermédiaire comprend une composante du signal de contrôle intermédiaire $S_c$ (par exemple $S_{c-1}$ ou $S_{c-2}$) et un état quantique (ou de façon simplifiée appelé 'composante') du signal quantique intermédiaire $|\Psi_1\rangle$ (par exemple $|\Psi_{1-1}\rangle$ ou $|\Psi_{1-2}\rangle$). L'unité de séparation de faisceau 240 peut être un coupleur optique symétrique (par exemple en Y fibré de type 50/50) à maintien de polarisation, configuré pour fournir deux composantes $S_{1-1}$ et $S_{1-2}$ du signal intermédiaire composées d'impulsions à intensité égale.

Selon des modes de réalisation, le module interférométrique d'encodage 200 peut être un interféromètre de Michelson, comme l'exemple illustré sur la figure 3. Avantageusement, un tel module interférométrique d'encodage 200 peut comprendre des miroirs de Faraday 242 et 248, disposés en extrémités des bras interférométriques 240-1 et 240-2, configurés pour compenser certaines variations en polarisation subies par les composantes $S_{1-1}$ et $S_{1-2}$ du signal intermédiaire lors de leur parcours respectif le long d'un des deux bras de l'interféromètre 240-1 ou 240-2.

Par ailleurs, comme représenté sur la figure 3, dans ces modes de réalisation, le séparateur de faisceau 240 du module interférométrique d'encodage 200 peut être configuré pour recombiner, en un signal interférométrique encodé résultant $S_2$, les composantes de faisceaux $S_{1-1}$ et $S_{1-2}$ du signal intermédiaire, à la suite de leur parcours respectif le long d'un des deux bras interférométriques 240-1 ou 240-2.

Alternativement, le module interférométrique d'encodage 200 peut être un interféromètre de Mach-Zhender (configuration non représentée sur les figures). Dans ces modes de réalisation, le module interférométrique d'encodage 200 comprend un coupleur de faisceau disposé en extrémité des bras interférométriques 240-1 et 240-2 et configuré pour recombiner les composantes de faisceaux $S_{1-1}$ et $S_{1-2}$ du signal intermédiaire, en un signal interférométrique résultant $S_2$.

Le premier bras interférométrique 240-1 ne comprend aucun élément optique supplémentaire. En outre, le premier bras interférométrique 240-1 est le bras de référence de phase, tel que la composante $S_{1-1}$ du signal intermédiaire parcourant le premier bras interférométrique 240-1 ne subit pas de fluctuation de phase.

Dans des modes de réalisation, les deux bras interférométriques 240-1 et 240-2 peuvent avoir des longueurs de bras différentes, tel que l'interféromètre comprend un bras interférométrique court et un bras interférométrique long. La différence de longueur entre les deux bras interférométriques est notée $\Delta L$. L'interféromètre du module d'encodage 200 et l'interféromètre du module de transcodage 300 (ayant des architectures sensiblement identiques) peuvent avoir la même différence de longueur $\Delta L$. Par exemple et sans limitation, cette différence de longueur $\Delta L$ peut être inférieure à la longueur de cohérence $L_c$ de l'unité laser 120, et supérieure à la taille de l'impulsion $L_0$ définie à partir de la largeur temporelle d'une impulsion $L_0 = c \times \tau_0$, c désignant la vitesse de la lumière et $\tau_0$ la largeur temporelle d'impulsion. Cette différence de longueur $\Delta L$ induit une séparation temporelle entre les composantes $S_{1\text{-}1}$ et $S_{1\text{-}2}$ du signal intermédiaire, parcourant chacun un des deux bras interférométriques 240-1 ou 240-2, après recombinaison en un signal interférométrique encodé $S_2$. De façon générale, pour un interféromètre, cette séparation temporelle est définie tel que les composantes de signal sont retardées d'une durée $\Delta t$, calculée à partir de la différence $\Delta L$. En outre, une composante en sortie d'un interféromètre comporte un retard appelé « retard interférométrique » et noté t, tel que :

- une composante parcourant le bras interférométrique court comporte un retard interférométrique t = 0 ; et

- la composante parcourant le bras interférométrique long comporte un retard interférométrique t = $\Delta t$ par rapport à la composante parcourant le bras interférométrique court.

Dans une première variante de l'invention, le premier bras interférométrique 240-1 peut être le bras interférométrique court. Dans cette variante de l'invention, le deuxième bras interférométrique 240-2 peut être le bras interférométrique long selon la différence de longueur $\Delta L$ entre les deux bras. Alternativement, dans une seconde variante de l'invention, le premier bras interférométrique 240-1 peut être le bras interférométrique long, alors que le deuxième bras interférométrique 240-2 peut être le bras interférométrique court.

Le module interférométrique d'encodage 200 comprend en outre un dispositif d'encodage 240D configurée pour appliquer une modulation de phase $\alpha$ uniquement à une composante du signal quantique intermédiaire $|\Psi_1\rangle$. En particulier, le dispositif d'encodage 240D peut être disposé (i.e. positionné) sur le deuxième bras interférométrique 240-2.

Le dispositif d'encodage 240D peut comprendre unité de séparation fréquentielle 244 configurée pour séparer (i.e. sélectionner fréquentiellement ou spectralement) la composante $S_{1\text{-}2}$ du signal intermédiaire parcourant le deuxième bras interférométrique 240-2, de manière à obtenir les composantes de faisceaux suivantes :

- la composante $S_{c\text{-}2}$ du signal de contrôle intermédiaire $S_c$ parcourant une voie dite « voie de signal de contrôle de l'émetteur Alice » 244-1, et

- l'état quantique $|\Psi_{1\text{-}2}\rangle$ correspondant au photon du signal quantique intermédiaire parcourant une voie dite « voie de signal quantique de l'émetteur Alice » 244-2.

Par ailleurs, le dispositif d'encodage 240D peut comprendre une unité de recombinaison fréquentielle 246 configurées pour recombiner fréquentiellement, sur le deuxième bras interférométrique 240-2, les composantes $S_{c\text{-}2}$ et $|\Psi_{1\text{-}2}\rangle$ parcourant les voies de signal 244-1 et 244-2.

L'unité de recombinaison fréquentielle 246 peut être identique à l'unité de séparation fréquentielle 244 du module de génération de signal 100. Par exemple, ces deux unités peuvent être des démultiplexeurs de fréquence (dénoté DEMUX) reposant sur une technologie qui dépend du décalage fréquentiel $\Delta\omega$ entre le signal de contrôle intermédiaire $S_2$ et le signal quantique intermédiaire $S_q$.

Comme représenté sur la figure 3, la voie de signal de contrôle 244-1 de l'émetteur Alice ne présente aucun élément optique supplémentaire.

Avantageusement, le dispositif d'encodage 240D peut comprendre une unité de modulation de phase 2442 configurée pour moduler, selon un paramètre $\alpha$ (également appelé 'modulation de phase $\alpha$'), la phase du photon (d'état quantique $|\Psi_{1\text{-}2}\rangle$) du signal quantique intermédiaire parcourant la voie de signal quantique 244-2 de l'émetteur Alice. L'unité de modulation de phase 2442 peut aussi être appelée 'unité d'encodage' 2442 (permettant l'encodage d'une clé de cryptage quantique).

Par exemple et de manière non limitative, une unité d'encodage 2442 peut être un modulateur électro-optique constitué de cristaux électro-optiques auxquels sont appliqués un signal électrique défini à partir d'une unité de contrôle 2444. L'unité de contrôle peut être par exemple un générateur de tension configuré pour contrôler le paramètre $\alpha$. La phase du photon (d'état quantique $|\Psi_{1\text{-}2}\rangle$) du signal quantique intermédiaire traversant l'unité 2442 est alors modulée de manière à encoder une information quantique.

Avantageusement, le paramètre $\alpha$ peut être choisi dans un ensemble des deux bases orthogonales comme par exemple $[0, \pi]$ et $[\pi/2, 3\pi/2]$. Il est à noter que ce choix de paramètre $\alpha$ et l'encodage en phase de l'information quantique constituent une nouvelle alternative à l'approche classique d'un protocole nommé BB84 (comme décrit dans l'article "Quantum cryptography: Public key distribution and coin tossing" de C. Bennett et G. Brassard, 1884, Theoretical Computer Science, vol. 560, 1984, p. 7-11). Dans le protocole BB84 l'encodage de l'information quantique s'effectue sur la polarisation des photons (et non sur leur phase). L'implémentation classique du protocole BB84 d'encodage en polarisation est limitée à des contraintes systèmes relatives à la correction d'erreurs sur la polarisation du signal quantique. Cette correction étant de type mécanique (par exemple en utilisant des lames demi-onde motorisées), l'implémentation classique du protocole BB84 est donc limitée en termes de bande-passante du signal quantique par rapport à une solution d'encodage en phase utilisant des dispositifs électro-optiques (par exemple un modulateur électro-optique) permettant une mise en œuvre à haut débit. Le haut débit obtenu avec les modes de réalisation de l'invention est également plus important par rapport à un encodage utilisant le multiplexage temporel qui nécessite plus de corrections d'erreurs de fluctuations et permet ainsi de réduire le débit d'encodage et de transfert des qubits. Dans une application de l'invention au domaine spatial, le débit d'encodage et de transfert des qubits est par exemple limité au temps de passage d'un satellite. Le nombre de qubits échangés lors d'un passage est donc réduit dans ce cas. Par ailleurs, si les fluctuations deviennent trop importantes, le seuil critique d'erreurs corrigibles (égale environ à 10%) peut être dépassé de sorte que l'établissement de la clé deviendrait impossible. Le haut débit du procédé d'encodage en phase présente ainsi l'avantage d'augmenter le nombre de qubits échangés dans une communication quantique limitée en temps, ce qui permet d'établir une clé secrète entre deux utilisateurs distants.

L'unité de contrôle 2444 de l'unité d'encodage 2442 de l'émetteur Alice peut avantageusement comprendre un générateur de nombre aléatoire quantique plus sûr que les générateurs de nombres pseudo-aléatoires logiciels classiquement utilisés dans les ordinateurs pour générer des nombres aléatoires. De tels générateurs de nombres pseudo-aléatoires classiques utilisent un algorithme déterministe pour produire des séquences de nombres aléatoires prédites. Au contraire, un générateur de nombre aléatoire quantique permet d'obtenir une séquence de paramètres $\alpha$ à encoder sur la phase du signal quantique, de manière aléatoire selon une probabilité statistique quantique qui n'est pas prévisible, ce qui permet de fournir un plus haut niveau de sécurité de clé secrète.

Par ailleurs, les composantes $|\Psi_{1-2}\rangle$ du signal quantique intermédiaire et $S_{c-2}$ du signal de contrôle intermédiaire parcourant le deuxième bras interférométrique 240-2 peuvent subir des fluctuations de phase. Cependant, ces deux composantes $|\Psi_{1-2}\rangle$ et $S_{c-2}$ suivent des chemins optiques similaires de sorte qu'en sortie de l'interféromètre du module interférométrique d'encodage 200, les composantes $|\Psi_{1-2}\rangle$ et $S_{c-2}$ portent le même décalage de phase $\varphi_A$ par rapport aux composantes $|\Psi_{1-1}\rangle$ et $S_{c-1}$ parcourant le premier bras interférométrique 240-1. Ceci n'est pas le cas dans les dispositifs de l'état de la technique où le signal quantique et le signal de contrôle suivent des chemins optiques différents, par exemple si le signal de contrôle emprunte un premier bras interférométrique court et le signal quantique « emprunte » un deuxième bras interférométrique long. Il est à noter que le terme « emprunter » dans le cas du signal quantique est utilisé par souci de simplification. En effet, en pratique le signal quantique n' « emprunte » pas un chemin optique spécifique ou l'autre mais plus précisément l'équivalent d'une superposition des deux chemins optiques.

En sortie de l'interféromètre du module interférométrique d'encodage 200, le signal de contrôle interférométrique résultant, noté $S_{cA}$, peut être défini en fonction du signal de contrôle intermédiaire $S_c$ et du décalage de phase $\varphi_A$, selon l'équation (07) suivante :

$$S_{cA} = \frac{1}{2} \times \left(1 + e^{i\varphi_A}\right) \times S_c \qquad (07)$$

En particulier, le signal de contrôle interférométrique $S_{cA}$ est constitué de deux impulsions lumineuses classiques de même intensité, séparées temporellement de la quantité $\Delta t$, définie à partir de la différence $\Delta L$.

En sortie de l'interféromètre du module interférométrique d'encodage 200, le signal quantique interférométrique encodé résultant, noté $|\Psi_A\rangle$, peut être défini en fonction de la modulation de phase $\alpha$ et du décalage de phase $\varphi_A$, selon l'équation (08) suivante :

$$|\Psi_A\rangle = \frac{1}{\sqrt{2}} \times \left(|\Psi_{1-1}\rangle + e^{i(\alpha + \varphi_A)} |\Psi_{1-2}\rangle\right) \qquad (08)$$

Il est à noter que l'état quantique $|\Psi_A\rangle$ peut être représenté par une superposition des états $|\Psi_{1-1}\rangle$ et $|\Psi_{1-2}\rangle$, tels que l'état $|\Psi_{1-1}\rangle$ correspond au photon du signal quantique intermédiaire ayant emprunté le premier bras interférométrique 240-1 et l'état $|\Psi_{1-2}\rangle$ correspond au photon du signal quantique intermédiaire ayant emprunté le premier bras interférométrique 240-2.

Par conséquent, en sortie de l'interféromètre du module interférométrique d'encodage 200, le signal inter-férométrique encodé $S_2$ comprend le signal de contrôle interférométrique $S_{cA}$ et le signal quantique interférométrique encodé $|\Psi_A\rangle$, et peut être défini selon l'équation (09) suivante :

$$S_2 = S_{cA} + |\Psi_A\rangle \qquad\qquad (09)$$

Comme représenté sur la figure 3, dans des modes de réalisation utilisant un interféromètre de Michelson, le signal interférométrique encodé $S_2$ peut se propager alors d'une part vers le module de génération de signal 100 et d'autre part vers le récepteur Bob, selon le chemin optique 240-3. Dans ces modes de réalisation, le module interférométrique d'encodage 200 de l'émetteur Alice peut comprendre en outre une unité de déviation de signal 220 configurée pour dévier (i.e. rediriger) le signal interférométrique encodé $S_2$ vers une unité de contrôle 222 du signal interférométrique. Par exemple, l'unité de contrôle 222 peut être une photodiode de contrôle permettant de contrôler le signal interférométrique encodé $S_2$ transmis par l'émetteur Alice au récepteur Bob. L'unité de déviation de signal 320 peut être un circulateur optique. L'unité de déviation de signal 220 permet d'empêcher le transfert du signal interférométrique encodé $S_2$ dans le module de génération de signal 100.

Lors de la propagation dans le canal de transmission 50 entre l'émetteur Alice et le récepteur Bob, le signal quantique et le signal de contrôle du signal interférométrique encodé $S_2$ peuvent aussi subir des fluctuations de phase de propagation. La propagation dans le canal de transmission 50 étant commune pour les deux composantes du signal interférométrique encodé $S_2$, ces fluctuations de phase de propagation n'ont pas d'influence sur le résultat de la mesure des interférences quantiques effectuée par le récepteur Bob.

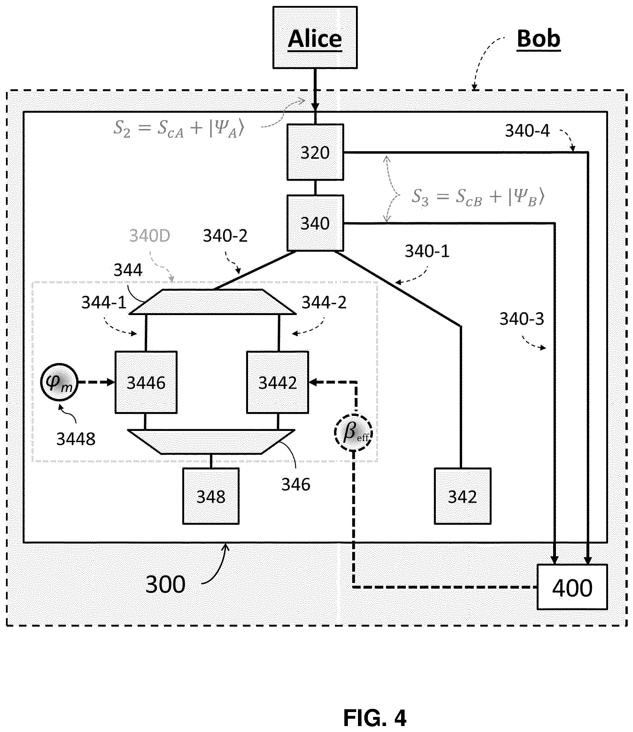

La figure 4 représente schématiquement un module interférométrique de transcodage 300 du récepteur Bob, selon des modes de réalisation de l'invention.

Le module interférométrique de transcodage 300 a une architecture d'interféromètre optique dissymétrique similaire au module interférométrique d'encodage 200 de l'émetteur Alice. Ainsi, le module interférométrique de transcodage 300 comprend un séparateur de faisceau 340 (par exemple un coupleur optique symétrique en Y, fibré de type 50/50 à maintien de polarisation) configuré pour séparer le faisceau du signal interférométrique $S_2$ transmis par l'émetteur Alice en deux composantes de faisceaux, notées $S_{2\text{-}1}$ et $S_{2\text{-}2}$. Les composantes $S_{2\text{-}1}$ et $S_{2\text{-}2}$ (composées d'impulsions à intensité égale par exemple) parcourent chacune un premier bras interférométrique noté 340-1 ou un deuxième bras interférométrique noté 340-2. Le signal interférométrique encodé $S_2$ comprenant un signal de contrôle et un signal quantique, chacune des composantes $S_{2\text{-}1}$ et $S_{2\text{-}2}$ du signal intermédiaire comprend une composante du signal de contrôle interférométrique (par exemple noté $S_{cA\text{-}1}$ ou $S_{cA\text{-}2}$) et un état quantique (ou de façon simplifiée appelé une « composante ») du signal quantique interférométrique (par exemple noté $|\Psi_{A\text{-}1}\rangle$ ou $|\Psi_{A\text{-}2}\rangle$).

Dans un mode de réalisation où le module interférométrique d'encodage 200 de l'émetteur Alice est un interféromètre de Mach-Zhender le module interférométrique de transcodage 300 peut être un interféromètre de Mach-Zhender. Dans un autre mode de réalisation où le module interférométrique d'encodage 200 est un interféromètre de Michelson, le module interférométrique de transcodage 300 peut être avantageusement un interféromètre de Michelson comprenant des miroirs de Faraday 342 et 348, disposés chacun à l'extrémité de l'un des deux bras interférométriques 340-1 et 340-2 de manière à compenser les variations en polarisation subies par les composantes de faisceaux $S_{2\text{-}1}$ et $S_{2\text{-}2}$.

Similairement au module interférométrique d'encodage 200 de l'émetteur Alice, le premier bras interférométrique 340-1 ne comprend aucun élément optique supplémentaire. En outre, le premier bras interférométrique 340-1 est le bras de référence de phase, tel que la composante $S_{2\text{-}1}$ du signal interférométrique encodé $S_2$ ne subit pas de fluctuation de phase. Le premier bras interférométrique 340-1 peut être le bras le plus court tandis que le deuxième bras interférométrique 340-2 est le bras le plus long, les deux bras présentant entre eux une différence de longueur $\Delta L$. Alternativement, le premier bras interférométrique 340-1 peut être le bras le plus long tandis que le deuxième bras interférométrique 340-2 est le bras le plus court.

Le module interférométrique de transcodage 300 du récepteur Bob comprend en outre un dispositif 340D de transcodage et de modulation de phase configuré pour appliquer une modulation de phase $\beta_{eff}$ uniquement à une composante du signal quantique interférométrique encodé $|\Psi_A\rangle$ et une modulation de phase $\varphi_m$ uniquement à une composante du signal de contrôle interférométrique $S_{cA}$. Le dispositif de transcodage et de modulation de phase 340D peut être disposé (i.e. positionné) sur le deuxième bras interférométrique 340-2.

Le dispositif de transcodage et de modulation de phase 340D peut comprendre une unité de séparation fréquentielle 344 configurée pour séparer (i.e. sélectionner fréquentiellement) la composante $S_{2\text{-}2}$ du signal intermédiaire parcourant le deuxième bras interférométrique 340-2, de manière à obtenir les composantes de faisceaux suivantes :

- la composante $S_{cA\text{-}2}$ du signal de contrôle interférométrique $S_{cA}$ parcourant la voie de signal de contrôle du récepteur Bob 344-1, et

- l'état quantique $|\Psi_{A\text{-}2}\rangle$ correspondant au photon du signal quantique intermédiaire parcourant la voie de signal quantique du récepteur Bob 244-2.

Le dispositif de transcodage et de modulation de phase 340D peut comprendre une unité de recombinaison fréquentielle 346 configurées pour recombiner fréquentiellement, sur le deuxième bras interférométrique 340-2, les composantes $S_{cA-2}$ et $|\Psi_{A-2}\rangle$ parcourant les voies de signal 344-1 et 344-2.

L'unité de séparation fréquentielle 344 et l'unité de recombinaison fréquentielle 346 du récepteur Bob peuvent être identiques respectivement à l'unité de séparation fréquentielle 244 et à l'unité de recombinaison fréquentielle 246 de l'émetteur Alice. Elles peuvent ainsi être mises en œuvre sous la forme d'un démultiplexeur et d'un multiplexeur en fréquence reposant sur une technologie qui dépend du décalage fréquentiel $\Delta\omega$ entre le signal de contrôle intermédiaire $S_2$ et le signal quantique intermédiaire $S_q$.

A la différence du dispositif d'encodage 240D de l'émetteur Alice, le dispositif de transcodage et de modulation de phase 340D du récepteur Bob peut comprendre une unité de modulation de phase 3446 configurée pour moduler, selon un paramètre $\varphi_m$, la phase de la composante $S_{cA-2}$ du signal de contrôle interférométrique $S_{cA}$ se propageant sur la voie de signal de contrôle du récepteur Bob 344-1.

Le paramètre $\varphi_m$ de modulation de phase de l'unité de modulation de phase 3446 peut être contrôlé par une unité de contrôle 3448 qui peut être par exemple un générateur de tension configuré pour émettre un signal radiofréquence permettant de générer une modulation de phase sinusoïdale. Ce signal radiofréquence peut avoir une phase nulle et dépendre d'une fréquence $\omega_m$. Une telle modulation de phase notée $\varphi_m$ peut être définie, en fonction d'un paramètre $\Delta\varphi$ correspondant à la profondeur de modulation, selon l'équation (10) suivante :

$$\varphi_m(t) \; = \; \Delta\varphi \; \times \cos(\omega_m.t) \qquad\qquad (10)$$

De manière similaire au dispositif d'encodage 240D de l'émetteur Alice, le dispositif de transcodage et de modulation de phase 340D du récepteur Bob peut comprendre une unité de modulation de phase 3442 configurée pour moduler, selon un paramètre $\beta_{eff}$, la phase du photon (d'état quantique $|\Psi_{A-2}\rangle$) du signal quantique intermédiaire parcourant la voie de signal quantique 344-2 du récepteur Bob. Par exemple, et de façon non limitative, l'unité de modulation de phase 3442 peut être similaire à l'unité de modulation de phase 2442. L'unité de modulation de phase 3442 peut aussi être appelée unité de transcodage 3442 (permettant de transcoder l'information encodée de la clé de cryptage quantique).

Les composantes $|\Psi_{A-2}\rangle$ du signal quantique interférométrique et $S_{cA-2}$ du signal de contrôle interférométrique parcourant le deuxième bras interférométrique 340-2 peuvent subir des fluctuations de phase. Cependant, ces deux composantes suivant des chemins optiques similaires de sorte qu'en sortie de l'interféromètre du module interférométrique de transcodage 300, les composantes $|\Psi_{A-2}\rangle$ et $S_{cA-2}$ portent le même décalage de phase $\varphi_B$.

En sortie de l'interféromètre du module interférométrique de transcodage 300, le signal de contrôle interférométrique modulé en phase, noté $S_{cB}$, peut être défini en fonction du signal de contrôle interférométrique $S_{cA}$ et des décalages de phase $\varphi_m$ et $\varphi_B$, selon l'équation (11) suivante :

$$S_{cB} = \frac{1}{2} \times \left(1 + e^{i\times(\varphi_m+\varphi_B)}\right) \times S_{cA} \qquad\qquad (11)$$

En particulier, le signal de contrôle interférométrique $S_{cA}$ est constitué de trois impulsions lumineuses classiques, séparées temporellement de la quantité $\Delta t$ (i.e. impulsions de retard interférométrique égal à 0, $\Delta t$ et $2 \times \Delta t$), définie à partir de la différence de longueur $\Delta L$ des interféromètres de l'émetteur Alice et du récepteur Bob.

Dans des modes de réalisation, le module de traitement 400 est configuré pour déterminer la correction différentielle des fluctuations de phase entre les décalages de phase $\varphi_A$ et $\varphi_B$ des modules interférométriques 200 et 300, à partir de mesures des fluctuations d'intensité prédéfinies sur le signal de contrôle interférométrique $S_{cA}$, en sortie du module interférométrique de transcodage 300. Les fluctuations d'intensité correspondent notamment aux interférences entre les photons du signal de contrôle, constituant des impulsions lumineuses classiques ayant un retard interférométrique $\Delta t$, et ayant donc emprunté :

- d'une part, le premier bras interférométrique 240-1 de l'émetteur Alice puis le deuxième bras interférométrique 340-2 du récepteur Bob, et

- d'autre part, le deuxième bras interférométrique 240-2 de l'émetteur Alice puis le premier bras interférométrique 340-1 du récepteur Bob.

Selon des modes de réalisation de l'invention, le paramètre $\beta_{eff}$ de modulation de phase de l'unité de transcodage 3442 peut être directement contrôlé par le module de traitement 400 du récepteur Bob tel que représenté sur la figure 4. En

particulier, le paramètre $\beta_{eff}$ peut alors être défini à partir d'un paramètre $\beta$ de modulation de phase obtenu de façon similaire au paramètre $\alpha$, mais comprenant une correction différentielle des fluctuations de phase entre les décalages de phase $\varphi_A$ et $\varphi_B$ des modules interférométriques 200 et 300, définie à partir de au moins une mesure du signal de contrôle interférométrique $S_{cB}$.

A titre de simplification, en sortie de l'interféromètre du module interférométrique de transcodage 300, le signal quantique interférométrique transcodé résultant, noté $|\Psi_B\rangle$, peut être défini en fonction du signal quantique interférométrique encodé $|\Psi_A\rangle$, de la modulation de phase $\beta_{eff}$ et du décalage de phase $\varphi_B$.

Par conséquent, en sortie de l'interféromètre du module interférométrique de transcodage 300, le signal interférométrique transcodé $S_3$ comprend le signal de contrôle interférométrique $S_{cB}$ et le signal quantique interférométrique transcodé $|\Psi_B\rangle$, et peut être défini selon l'équation (12) suivante :

$$S_3 = S_{cB} + |\Psi_B\rangle \qquad (12)$$

Comme représenté sur la figure 4, dans des modes de réalisation utilisant un interféromètre de Michelson, le signal interférométrique transcodé $S_3$ peut se propager d'une part vers l'émetteur Alice et d'autre part vers le module de traitement 400, selon le chemin optique 340-3 (qui correspond au premier port de sortie de l'interféromètre du module 300). Dans de tels modes de réalisation, le module interférométrique de transcodage 300 peut comprendre en outre une unité de déviation de signal 320 configurée pour dévier (i.e. rediriger) le signal interférométrique transcodé $S_3$ vers le module de traitement 400 selon le chemin optique 340-4 (qui correspond au second port de sortie de l'interféromètre du module 300). Par exemple, l'unité de déviation de signal 320 peut être un circulateur optique. L'unité de déviation de signal 320 permet d'empêcher le transfert du signal interférométrique transcodé $S_3$ vers le canal de transmission 50.

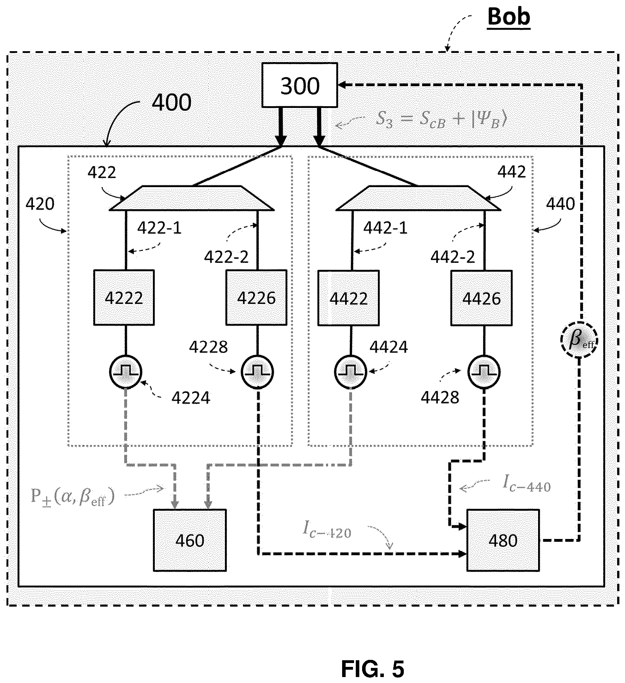

La figure 5 représente schématiquement le module de traitement 400 du récepteur Bob, selon des modes de réalisation de l'invention.

Le module de traitement 400 comprend deux parties de traitement, chacune associée à l'un des deux chemins optiques 340-3 et 340-4 obtenus en sortie du module interférométrique 300 du récepteur Bob.

Chaque partie de traitement 420 (respectivement 440) comprend une unité de séparation fréquentielle 422 (respectivement 442) configurée pour séparer (i.e. sélectionner fréquentiellement) le signal de contrôle interférométrique modulé en phase $S_{cB}$ du signal quantique interférométrique transcodé résultant $|\Psi_B\rangle$ de manière à ce qu'ils parcourent un des deux bras de mesure 422-1 ou 422-2 (respectivement 442-1 ou 442-2) associés à la partie de traitement 420 (respectivement 440). Par exemple et sans limitation, le bras de mesure 422-1 pour la partie de traitement 420 et le bras de mesure 442-1 pour la partie de traitement 440 peuvent être les bras de mesure quantique, tandis que le bras de mesure 422-2 pour la partie de traitement 420 et le bras de mesure 442-2 pour la partie de traitement 440 peuvent être les bras de mesure de contrôle. Par conséquent, le signal quantique interférométrique transcodé $|\Psi_B\rangle$ parcourt le bras de mesure quantique 422-1 (respectivement 442-1), et le signal de contrôle interférométrique modulé en phase $S_{cB}$ parcourt le bras de mesure de contrôle 422-2 (respectivement 442-2). Les unités de séparation fréquentielle 422 et 442 peuvent être des démultiplexeurs en fréquence reposant sur une technologie qui dépend du décalage fréquentiel $\Delta\omega$ entre le signal de contrôle intermédiaire $S_2$ et le signal quantique intermédiaire $S_q$.

Chaque partie de traitement 420 (respectivement 440) comprend une unité de détection de photon unique 4222 (respectivement 4422) positionnée sur le bras de mesure quantique 422-1 (respectivement 442-1). Une unité de détection de photon unique peut comprendre une surface de détection et être configurée pour détecter la « présence » de photons uniques à sa surface de détection (i.e. par interaction photon/surface). Cette détection de la présence de photons uniques est définie selon une efficacité quantique de détection donnée. Par exemple et sans limitation, l'unité de détection de photon unique 4222 (respectivement 4422) peut être une photodiode à avalanche (APD, acronyme pour l'expression anglo-saxonne correspondante 'Avalanche Photodiode Detector') ou encore un détecteur de photon unique à nanofil supraconducteur (SNSPD, acronyme pour l'expression anglo-saxonne correspondante 'Superconducting Nanowire Single Photon Detector'). En particulier, l'unité de détection de photon unique 4222 (respectivement 4422) peut comprendre un mécanisme d'amplification interne configuré pour délivrer une tension, lorsque qu'un photon est détecté.

Chaque unité de détection de photons 4222 et 4422 peut être configuré pour effectuer une mesure dite « mesure interférométrique » du signal quantique interférométrique transcodé $|\Psi_B\rangle$. En d'autres termes, chaque unité de détection de photons 4222 et 4422 peut mesurer le résultat d'une interférence entre photons à partir de la projection de l'état quantique associé au signal quantique intermédiaire $|\Psi_A\rangle$ sur l'état quantique associé au signal quantique interférométrique transcodé $|\Psi_B\rangle$.

L'homme du métier comprendra que le module de traitement 400 est configuré pour effectuer une sélection temporelle du signal quantique interférométrique transcodé $|\Psi_B\rangle$, le signal quantique interférométrique encodé $|\Psi_A\rangle$ étant alors projeté :

- au niveau du module de réception 4222, sur un état quantique noté $|\Psi_{B+}\rangle$ tel que :

$$|\Psi_{B+}\rangle = \frac{1}{\sqrt{2}} \times \left( |\Psi_{A-1}\rangle + e^{i(\beta+\varphi_B)} |\Psi_{A-2}\rangle \right) \tag{13}$$

- au niveau du module de réception 4422, sur un état quantique noté $|\Psi_{B-}\rangle$ tel que :

$$|\Psi_{B-}\rangle = \frac{1}{\sqrt{2}} \times \left( |\Psi_{A-1}\rangle - e^{i(\beta+\varphi_B)} |\Psi_{A-2}\rangle \right) \tag{14}$$

Les états quantiques $|\Psi_{B+}\rangle$ et $|\Psi_{B-}\rangle$ sont aussi appelés « états quantiques transcodés ». Comme présenté dans les équations (13) et (14), les états quantiques $|\Psi_{B+}\rangle$ et $|\Psi_{B-}\rangle$ peuvent être représentés par une superposition des états $|\Psi_{A-1}\rangle$ et $|\Psi_{A-2}\rangle$, tels que l'état $|\Psi_{A-1}\rangle$ correspond au photon du signal quantique interférométrique encodé ayant emprunté le premier bras interférométrique 340-1 et l'état $|\Psi_{A-2}\rangle$ correspond au photon du signal quantique interférométrique encodé ayant emprunté le premier bras interférométrique 340-2.

Une « probabilité de détection », notée $P_+$ (ou $P_-$), de l'unité de détection de photon unique 4222 (ou 4422) peut être définie, à partir de l'équation (15) suivante :

$$P_{\pm} = \left| \langle \Psi_{B\pm} | \Psi_A \rangle \right|^2 \tag{15}$$

Selon l'équation (15), le signal quantique interférométrique transcodé, résultant du module interférométrique de transcodage 300, peut être décomposé sur une base de quatre modes temporels définis tels que :

- le premier mode temporel (correspondant à un état $|\Psi_{A-1}\Psi_{1-1}\rangle$) correspond au photon ayant emprunté le premier bras interférométrique 240-1 de l'émetteur Alice puis le premier bras interférométrique 340-1 du récepteur Bob. Dans ce cas, le retard interférométrique du photon est nul (t = 0) et la probabilité de détection d'un photon, possédant par convention une phase nulle, ne dépend pas des modulations de phases $\alpha$ et $\beta_{eff}$ ;

- le deuxième mode temporel (correspondant à un état $|\Psi_{A-2}\Psi_{1-2}\rangle$) correspond au photon ayant emprunté le deuxième bras interférométrique 240-2 de l'émetteur Alice (comprenant la modulation de phase $\alpha$) puis le deuxième bras interférométrique 340-2 du récepteur Bob (comprenant la modulation de phase $\beta_{eff}$). Dans ce cas, le retard interférométrique est de $2 \times \Delta t$. Bien que la phase du photon soit égale à $\alpha + \beta_{eff}$, la probabilité de détecter le photon est alors proportionnelle au module carré du champ électrique et n'est donc pas affectée par les deux paramètres de modulation de phase $\alpha$ et $\beta_{eff}$ ;

- le troisième mode temporel (correspondant à un état $|\Psi_{A-1}\Psi_{1-2}\rangle$) correspond au photon ayant emprunté le deuxième bras interférométrique 240-2 de l'émetteur Alice (comprenant la modulation de phase $\alpha$) puis le premier bras interférométrique 340-1 du récepteur Bob. Dans ce cas, le retard interférométrique du photon est de $\Delta t$ et le photon acquiert une phase $\alpha$ et subit des fluctuations de phase induisant un décalage de phase $\varphi_A$ associé notamment au bras interférométrique 240-2 du module interférométrique d'encodage 200 ; et

- le quatrième mode temporel (correspondant à un état $|\Psi_{A-2}\Psi_{1-1}\rangle$) correspond au photon ayant emprunté le premier bras interférométrique 240-1 de l'émetteur Alice puis le deuxième bras interférométrique 340-2 du récepteur Bob (comprenant la modulation de phase $\beta_{eff}$). Dans ce cas, le retard interférométrique du photon est de $\Delta t$ et le photon acquiert une phase $\beta_{eff}$ et subit des fluctuations de phase induisant un décalage de phase $\varphi_B$ associée au bras interférométrique 340-2 du module interférométrique de transcodage 300.

En particulier, seuls les photons ayant le même retard interférométrique, c'est-à-dire $t = \Delta t$, peuvent interférer entre eux. Par conséquent, le résultat de cette interférence correspond à une probabilité de détection des photons par l'unité 4222 (ou 4422) reçus avec un retard $\Delta t$ (i.e. troisième et quatrième modes temporels). Les « probabilités de détection » $P_+$ et $P_-$ peuvent être définies selon l'équation (16) suivante :

$$P_{\pm}(\alpha, \beta_{eff}) = \frac{1 \pm \cos(\alpha - \beta_{eff} + \varphi_A - \varphi_B)}{2} \qquad (16)$$

Il est à noter que l'attribution du signe + ou - à la probabilité de détection $P_+$ ou $P_-$ est effectuée (par réglage) de façon arbitraire au niveau du séparateur de faisceau 340 puis est fixée selon le parcours du photon sur l'un des deux chemins optiques 340-3 ou 340-4, puis 422-1 ou 442-1.

Le module de traitement 400 peut comprendre en outre une unité de stockage 460 des valeurs de probabilités de détection $P_{\pm}$.

Le système de détermination de clés de cryptage quantique 1 peut comprendre en outre un dispositif d'affichage (non représenté sur les figures) configuré pour générer un affichage des probabilités stockées sur une interface homme-machine.

Chaque partie de traitement 420 (respectivement 440) peut en outre comprendre une unité de détection auxiliaire 4226 (respectivement 4426) positionnée sur l'autre bras de mesure, c'est à dire le bras de mesure de contrôle 422-2 (respectivement 442-2). L'unité de détection auxiliaire 4226 (respectivement 4426) peut être configurée pour détecter des signaux d'impulsions lumineuses classiques (c'est-à-dire non quantiques). Par exemple et sans limitation, l'unité de détection auxiliaire 4226 (respectivement 4426) peut être une photodiode configurée pour délivrer un photo-courant, en fonction de la mesure du signal de contrôle interférométrique modulé en phase $S_{cB}$.

Chaque unité de détection auxiliaire 4226 et 4426 peut être configuré pour effectuer une mesure dite « mesure interférométrique » du signal de contrôle interférométrique modulé en phase $S_{cB}$. En d'autres termes, chaque unité de détection auxiliaire 4226 et 4426 peut mesurer le résultat d'une interférence entre les différents bras interférométriques possibles du signal de contrôle au travers des modules interférométriques 200 et 300.

Chaque bras de mesure 422-1 et 422-2, 442-1 et 442-2 du module de traitement 400 peut comprendre en outre une unité de filtrage électronique (notée respectivement 4224, 4228, 4424 et 4428) et positionnée après l'unité de détection de photon unique ou après l'unité de détection auxiliaire. Ces unités de filtrage peuvent être adapté pour générer des signaux créneaux et être configurées pour extraire les composantes temporelles centrales équivalentes au retard interférométrique $\Delta t$ des probabilités de détection (i.e. tensions mesurées) ou des photo-courants mesurés par les unités de détection 4222, 4226, 4422 et 4426.

Dans certains modes de réalisation, l'unité de détection auxiliaire 4226 (respectivement 4426) et l'unité de détection de photons uniques 4222 (respectivement 4422) de la partie de traitement 420 (respectivement 440) peuvent comprendre chacune un filtre fréquentiel (non représenté sur les figures) associé respectivement aux fréquences $\omega_c$ et $\omega_q$ de manière à optimiser la détection des signaux équivalents (i.e. signal de contrôle et signal quantique).

Comme indiqué par l'équation (18) définissant les probabilités de détection $P_{\pm}$, la qualité du contraste des interférences au niveau des photons uniques peut être affectée par les fluctuations de phase induisant les décalages de phase $\varphi_A$ et $\varphi_B$ reliées aux modules interférométriques 200 et 300, brouillant le signal quantique à mesurer. Ces paramètres conduisent en effet à des probabilités de détection moins bien marquées entre les deux unités de détection de photon unique 4222 et 4422, qui peuvent être corrigées via la modulation de phase $\beta_{eff}$ afin d'en déduire des probabilités de détection selon l'équation (17) suivante :

$$P_{\pm}(\alpha, \beta) = \frac{1 \pm \cos(\alpha - \beta)}{2} \qquad (17)$$

Le système de détermination de clés de cryptage quantique 1 selon les modes de l'invention peut ainsi être configuré pour corriger les fluctuations de phase parasites induisant les décalages de phase $\varphi_A$ et $\varphi_B$ en appliquant une modulation de phase $\beta_{eff}$ déterminée par rétroaction sur le signal quantique, à partir des mesures du signal de contrôle. Dans un mode de réalisation, le module de traitement 400 peut comprendre en outre une unité de correction 480 configurée pour déterminer une correction différentielle des fluctuations de phase entre les décalages de phase $\varphi_A$ et $\varphi_B$ des modules interférométriques 200 et 300, sans compromettre la sécurité de la clé secrète établie.

Les unités de détection auxiliaires des parties de traitement 420 et 440 sont configurées avantageusement pour mesurer le résultat d'une interférence entre les différents bras interférométriques possibles du signal de contrôle au travers des modules interférométriques 200 et 300, le signal de contrôle interférométrique modulé en phase $S_{cB}$ comportant trois impulsions lumineuses de différentes intensités, séparées temporellement de la quantité $\Delta t$. Seule la composante temporelle centrale $\Delta t$ est filtrée par les unités de filtrage 4228 et 4428 qui délivrent à l'unité de correction 480 deux photo-courants (notées par exemple $I_{420}$ et $I_{440}$) issus de chacune des mesures interférométriques du signal de contrôle provenant des deux chemins optiques 340-3 et 340-4 en sortie du module interférométrique 300 du récepteur Bob.

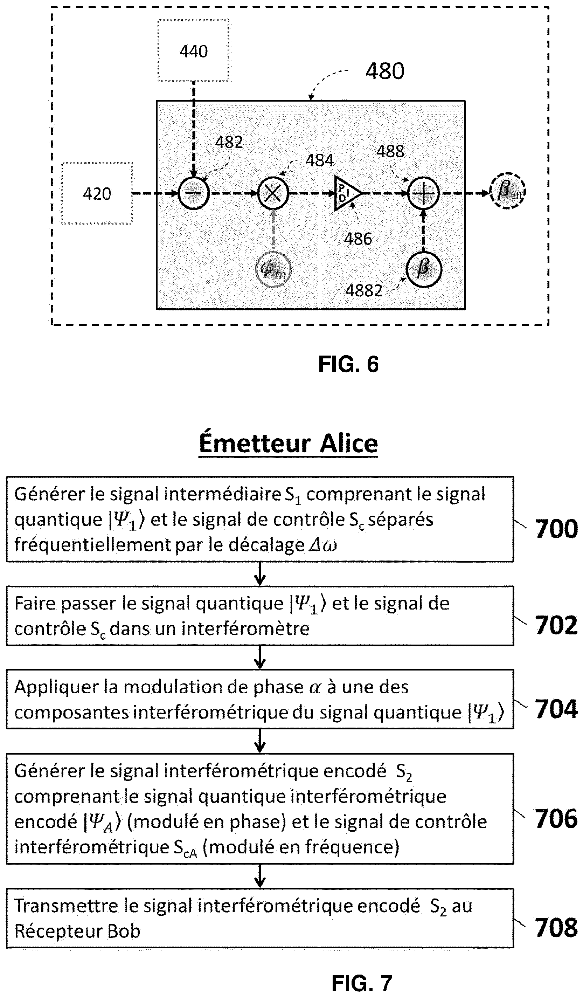

La figure 6 représente schématiquement l'unité de correction 480 du module de traitement 400, selon des modes de réalisation de l'invention.

L'unité de correction 480 peut être un module électronique.

Dans des modes de réalisation, l'unité de correction 480 peut comprendre un moyen de soustraction 482 configuré pour effectuer une soustraction $\delta = |I_{420} - I_{440}|$ entre les deux photo-courants $I_{420}$ et $I_{440}$, ce qui fournit un signal électronique $\delta$ proportionnel au terme $\cos(\varphi A - \varphi_B - \varphi_m)$.

L'unité de correction 480 peut comprendre en outre un moyen de multiplication 484 configuré pour effectuer le produit $\delta_m = \delta * \varphi_m$ entre le signal électronique $\delta$ et le signal de modulation sinusoïdal $\varphi_m$, qui dépend de l'unité de contrôle 3448 du module interférométrique 300 du récepteur Bob. L'unité de correction 480 peut comprendre un filtre passe-bas 486 de fréquence de coupure inférieure à $\omega_m$ configuré pour déterminer un signal électronique $\varepsilon$, dit signal d'erreur discret, à partir du produit $\delta_m$. Le signal d'erreur discret $\varepsilon$ est alors indépendant de la modulation de phase $\varphi_m$ et peut être défini par l'équation (18) suivante :

$$\varepsilon \propto -J_1(\Delta\varphi) \times \sin(\varphi_A - \varphi_B) \qquad (18)$$

Dans l'équation (20) du signal d'erreur discret $\varepsilon$, la composante $J_1$ correspond à la fonction de Bessel d'ordre 1. Le signal d'erreur discret $\varepsilon$ peut ainsi correspondre à la « correction différentielle $\varepsilon$ des fluctuations de phase entre les décalages de phase $\varphi_A$ et $\varphi_B$ ».

L'unité de correction 480 peut comprendre enfin un additionneur 488 configuré pour additionner le signal d'erreur discret $\varepsilon$ et une modulation de phase $\beta$ définie à partir d'une unité de contrôle 4882, ce qui fournit la modulation $\beta_{eff}$ qui permet d'annuler (de façon analogique ou numérique) les décalages de phase $\varphi_A$ et $\varphi_B$.

Avantageusement, le paramètre $\beta$ peut être obtenu de manière similaire au paramètre $\alpha$ défini à partir d'une unité de contrôle 2444. Par exemple, le paramètre $\beta$ peut être choisi par exemple dans un ensemble de deux bases orthogonales comme $[0, \pi]$ et $[\pi/2, 3\pi/2]$ dépendant d'un générateur de nombre aléatoire quantique.

Les coïncidences mesurées sur les détecteurs de photons uniques les probabilités $P_{\pm}$ définies par l'équation (17) sont ainsi uniquement données par $\alpha$ et $\beta$. Avantageusement, selon les modes de réalisation de l'invention, l'unité de correction 480 utilise une rétroaction de la modulation $\beta_{eff}$ en utilisant des éléments électroniques permettant d'effectuer une compensation (ou rétroaction) électronique plus rapide et continue, contrairement à l'état de la technique.

La figure 7 est un organigramme représentant le procédé de détermination de clés de cryptage quantique réalisé par l'émetteur Alice (i.e. procédé d'émission d'un signal interférométrique encodé $S_2$), selon des modes de réalisation de l'invention.

A l'étape 700, un signal intermédiaire $S_1$ est généré par le module 100 de l'émetteur Alice. Le signal intermédiaire $S_1$ comprend un signal quantique intermédiaire $S_q$ (noté $|\Psi_1\rangle$) et un signal de contrôle intermédiaire $S_c$ modulé en fréquence, selon un décalage de fréquence $\Delta\omega$ par rapport au signal quantique $|\Psi_1\rangle$.

A l'étape 702, le signal quantique intermédiaire $|\Psi_1\rangle$ et le signal de contrôle intermédiaire $S_c$ passent par un interféromètre (ayant deux bras interférométriques) du module interférométrique d'encodage 200 de l'émetteur Alice. Par conséquent, le signal $|\Psi_1\rangle$ et le signal $S_c$ se séparent chacun en deux composantes interférométriques qui traversent ensuite un des deux bras interférométriques du module interférométrique d'encodage 200.

A l'étape 704, la modulation de phase $\alpha$ est appliquée par le module interférométrique d'encodage 200 de l'émetteur Alice à une des deux composantes interférométriques du signal quantique $|\Psi_1\rangle$ dans l'interféromètre.

A l'étape 706, un signal interférométrique encodé $S_2$ est généré en sortie de l'interféromètre par le module interférométrique d'encodage 200 de l'émetteur Alice. Le signal interférométrique encodé $S_2$ comprend le signal quantique interférométrique encodé $|\Psi_A\rangle$, modulé en phase, et le signal de contrôle interférométrique $S_{cA}$ (modulée en fréquence).

A l'étape 708, le signal interférométrique encodé $S_2$ est alors transmis par l'émetteur Alice au récepteur Bob.

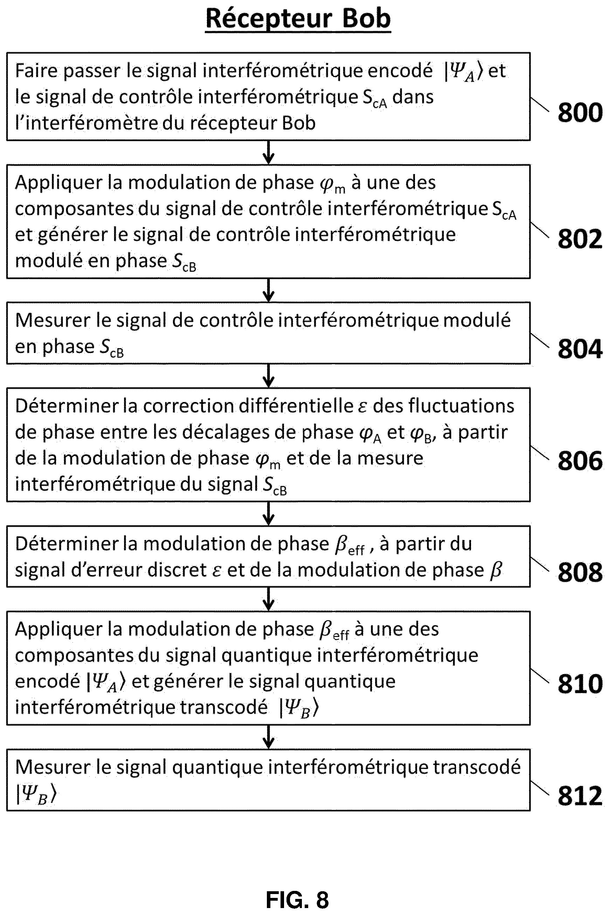

La figure 8 est un organigramme représentant le procédé de détermination de clés de cryptage quantique réalisé par le récepteur Bob (i.e. procédé de réception d'un signal interférométrique encodé $S_2$), selon des modes de réalisation de l'invention.

A l'étape 800, le signal quantique interférométrique encodé $|\Psi_A\rangle$ et le signal de contrôle interférométrique $S_{cA}$ passent par un interféromètre (ayant deux bras interférométriques) du module interférométrique de transcodage 300 du récepteur Bob. Le signal $|\Psi_A\rangle$ et le signal $S_{cA}$ se séparent alors chacun en deux composantes interférométriques qui traversent ensuite un des deux bras interférométriques du module interférométrique de transcodage 300.

A l'étape 802, la modulation de phase $\varphi_m$ est appliquée par le module interférométrique de transcodage 300 du récepteur Bob à une des deux composante du signal de contrôle interférométrique $S_{cA}$, ce qui fournit le signal de contrôle interférométrique modulé en phase $S_{cB}$ en sortie du module interférométrique 300.

A l'étape 804, au moins une mesure interférométrique du signal de contrôle interférométrique modulé en phase $S_{cB}$ est effectuée par le module de traitement 400 du récepteur Bob.

A l'étape 806, une opération de détermination du signal d'erreur discret $\varepsilon$ de correction différentielle des fluctuations de phase entre les décalages de phase $\varphi_A$ et $\varphi_B$ des modules interférométriques 200 et 300, est effectuée à partir de la modulation de phase $\varphi_m$ et de la mesure interférométrique du signal de contrôle interférométrique modulé en phase $S_{cB}$.

A l'étape 808, une opération de détermination de la modulation de phase $\beta_{eff}$ (prenant en compte la correction différentielle des fluctuations de phase entre les décalages de phase $\varphi_A$ et $\varphi_B$) est effectuée à partir du signal d'erreur discret $\varepsilon$ et d'une modulation de phase $\beta$.

A l'étape 810, la modulation de phase $\beta_{eff}$ est appliquée par le module interférométrique de transcodage 300 du récepteur Bob, à une des deux composantes du signal quantique interférométrique encodé $|\Psi_A\rangle$, ce qui fournit le signal quantique interférométrique transcodé $|\Psi_B\rangle$ (i.e. ce qui fournit la projection du signal $|\Psi_A\rangle$ sur les états quantiques transcodés $|\Psi_{B+}\rangle$ et $|\Psi_{B-}\rangle$), en sortie du module interférométrique 300.

A l'étape 812, au moins une mesure interférométrique du signal quantique interférométrique transcodé $|\Psi_B\rangle$ (i.e. la mesure interférométrique de la projection du signal quantique interférométrique encodé $|\Psi_A\rangle$ sur les états $|\Psi_{B+}\rangle$ et $|\Psi_{B-}\rangle$) est effectuée par le module de traitement 400 du récepteur Bob, en sortie du module interférométrique 300, pour en déduire la clé de quantique.

Le procédé de détermination de clés de cryptage quantique peut en outre comprendre à l'étape 700, une sous-étape 701 dans laquelle est implémenté un retard temporel du signal quantique intermédiaire $S_q$ par rapport au signal de contrôle intermédiaire $S_c$ pour générer le signal intermédiaire $S_1$.

Les modes de réalisation de l'invention permettent ainsi la mesure et la compensation en temps réel des décalages de phase $\varphi_A$ et $\varphi_B$ induits par les modules interférométriques 200 et 300, et par suite permettent une augmentation du rapport signal sur bruit de la composante quantique générée et encodée. Il en résulte une capacité maximale en termes de vitesse de modulation. En outre, le système de détermination de clés de cryptage quantique 1 a l'avantage d'être robuste aux fluctuations d'intensité des impulsions laser émises, notamment par rapport au signal de contrôle.

L'homme du métier comprendra que le système de détermination de clés de cryptage quantique 1 ou des sous-systèmes du système de détermination de clés de cryptage quantique 1, selon les modes de réalisation de l'invention, peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différents modules de l'émetteur Alice et du récepteur Bob décrits à titre d'exemples non limitatif. L'étendue de la protection conférée par la présente invention est donc définie par les revendications annexées.

## Revendications

1. Emetteur configuré pour transmettre un signal interférométrique encodé $S_2$ à travers un canal de transmission (50), où ledit émetteur comprend :

   - un module de génération de signal (100) configuré pour générer un signal quantique intermédiaire $|\Psi_1\rangle$ et un signal de contrôle intermédiaire $S_c$, ledit module de génération de signal (100) étant en outre configuré pour effectuer un décalage fréquentiel $\Delta\omega$ entre le signal quantique intermédiaire $|\Psi_1\rangle$ et le signal de contrôle intermédiaire $S_c$,
   - un module interférométrique d'encodage (200) configuré pour recevoir ledit signal quantique intermédiaire $|\Psi_1\rangle$ et ledit signal de contrôle intermédiaire $S_c$, et pour déterminer un signal interférométrique encodé $S_2$ comprenant un signal quantique interférométrique encodé $\Psi_A\rangle$ et un signal de contrôle interférométrique $S_{cA}$ à partir dudit signal quantique intermédiaire $|\Psi_1\rangle$ et dudit signal de contrôle intermédiaire $S_c$ parcourant un chemin optique sensiblement similaire, ledit module interférométrique d'encodage (200) comprenant un dispositif d'encodage (240D) configuré pour appliquer une modulation de phase $\alpha$ uniquement à une composante du signal quantique intermédiaire $|\Psi_1\rangle$.

2. Emetteur, selon la revendication précédente, dans lequel le module interférométrique d'encodage (200) est implémenté sous la forme d'un interféromètre optique asymétrique comprenant un premier bras interférométrique (240-1) et un deuxième bras interférométrique (240-2), le premier bras interférométrique (240-1) étant plus court que le deuxième bras interférométrique (240-2), et dans lequel ledit dispositif d'encodage (240D) comprend au moins une unité de séparation fréquentielle (244) positionnée sur ledit deuxième bras interférométrique (240-2), ladite unité de séparation fréquentielle (244) étant configurée pour effectuer un découplage fréquentiel du signal quantique intermédiaire $|\Psi_1\rangle$ et du signal de contrôle intermédiaire $S_c$.

3. Emetteur, selon l'une des revendications 1 ou 2, dans lequel le module de génération de signal (100) comprend en outre une unité de décalage temporel configurée pour décaler temporellement le signal quantique intermédiaire $|\Psi_1\rangle$ et le signal de contrôle intermédiaire $S_c$.

4. Récepteur configuré pour recevoir un signal quantique interférométrique encodé $|\Psi_A\rangle$ et un signal de contrôle interférométrique $S_{cA}$ à travers un canal de transmission (50), où ledit récepteur comprend :

- un module interférométrique de transcodage (300) configuré pour générer un signal quantique interférométrique transcodé $|\Psi_B\rangle$ et un signal de contrôle interférométrique modulé en phase $S_{cB}$ à partir dudit signal quantique interférométrique encodé $|\Psi_A\rangle$ et dudit signal de contrôle interférométrique $S_{cA}$ parcourant un chemin optique sensiblement similaire, ledit module interférométrique de transcodage (300) comprenant un dispositif de transcodage et de modulation de phase (340D) étant configuré pour appliquer une modulation de phase $\beta_{eff}$ uniquement à une composante du signal quantique interférométrique encodé $|\Psi_A\rangle$ et une modulation de phase $\varphi_m$ uniquement à une composante du signal de contrôle interférométrique $S_{cA}$,
- un module de traitement (400) configuré pour effectuer au moins une mesure du signal quantique interférométrique transcodé $|\Psi_B\rangle$ et au moins une mesure du signal de contrôle interférométrique modulé en phase $S_{cB}$, ledit module de traitement (400) étant en outre configuré pour déterminer la modulation de phase $\beta_{eff}$ à partir de la modulation de phase $\varphi_m$ et de ladite au moins une mesure du signal de contrôle interférométrique modulé en phase $S_{cB}$.

5. Récepteur, selon la revendication 4, dans lequel le module interférométrique de transcodage (300) est implémenté sous la forme d'un interféromètre optique asymétrique comprenant un premier bras interférométrique (340-1) et un deuxième bras interférométrique (340-2), le premier bras interférométrique (340-1) étant plus court que le deuxième bras interférométrique (340-2), et dans lequel ledit dispositif de transcodage et de modulation de phase (340D) comprend au moins une unité de séparation fréquentielle (344) positionnée sur ledit deuxième bras interférométrique (340-2), ladite unité de séparation fréquentielle (344) étant configurée pour effectuer un découplage fréquentiel du signal quantique interférométrique encodé $|\Psi_A\rangle$ et du signal de contrôle interférométrique $S_{cA}$.

6. Récepteur, selon d'une des revendications 4 ou 5, dans lequel le module interférométrique de transcodage (300) comprend deux chemins optiques (340-3, 340-4) en sortie dudit interféromètre, et dans lequel le module de traitement (400) comprend deux parties de traitement (420, 440), chaque partie de traitement comprenant chacune une unité de séparation fréquentielle (422, 442) et étant configurée pour effectuer une mesure parmi ladite au moins une mesure du signal quantique interférométrique transcodé $|\Psi_B\rangle$ et une mesure parmi ladite au moins une mesure du signal de contrôle interférométrique modulé en phase $S_{cB}$, provenant des deux chemins optiques (340-3 et 340-4)

7. Système de détermination de clé de cryptage quantique (1) comprenant un émetteur défini selon l'une des revendications 1 à 3 et un récepteur défini selon l'une des revendications 4 à 6.

8. Procédé d'émission d'un signal interférométrique encodé $S_2$, mis en œuvre par l'émetteur selon les revendications 1 à 3, le procédé comprenant les étapes consistant à :

- générer (700) un signal quantique intermédiaire $|\Psi_1\rangle$ de fréquence $\omega_q$ et un signal de contrôle intermédiaire $S_c$ de fréquence $\omega_c$ ayant un décalage fréquentiel égal à $\omega_q - \omega_c$
- appliquer (704) une modulation de phase $\alpha$ uniquement à une composante du signal quantique intermédiaire $|\Psi_1\rangle$ passant à travers un interféromètre, ledit signal quantique intermédiaire $|\Psi_1\rangle$ et ledit signal de contrôle intermédiaire $S_c$ parcourant un chemin optique sensiblement similaire pour générer un signal interférométrique encodé $S_2$ comprenant un signal quantique interférométrique encodé $|\Psi_A\rangle$ et un signal de contrôle interférométrique $S_{cA}$,
- générer (706) un signal interférométrique encodé $S_2$ comprenant ledit signal quantique interférométrique encodé $|\Psi_A\rangle$ et ledit signal de contrôle interférométrique $S_{cA}$.

9. Procédé d'émission d'un signal interférométrique encodé $S_2$, selon la revendication 8, dans lequel le procédé comprend en outre une étape consistant à appliquer (701) un retard temporel entre ledit signal quantique intermédiaire $|\Psi_1\rangle$ et ledit signal de contrôle intermédiaire $S_c$.

10. Procédé de réception d'un signal quantique interférométrique encodé $\Psi_A\rangle$ et d'un signal de contrôle interférométrique $S_{cA}$, mis en œuvre par le récepteur selon les revendications 4 à 6, le procédé comprenant les étapes consistant à :

- appliquer (802) une modulation de phase $\varphi_m$ à la composante du signal de contrôle interférométrique $S_{cA}$ et générer un signal de contrôle interférométrique modulé en phase $S_{cB}$,
- effectuer (804) au moins une mesure du signal de contrôle interférométrique modulé en phase $S_{cB}$,
- déterminer (808) une modulation de phase $\beta_{eff}$ à partir de ladite modulation de phase $\varphi_m$ et de la mesure du signal de contrôle interférométrique modulé en phase $S_{cB}$,
- appliquer (810) la modulation de phase $\beta_{eff}$ à la composante du signal quantique interférométrique encodé $|\Psi_A\rangle$ et générer un signal quantique interférométrique transcodé $|\Psi_B\rangle$, ledit signal quantique interférométrique encodé $|\Psi_A\rangle$ et ledit signal de contrôle interférométrique $S_{cA}$ parcourant un chemin optique sensiblement similaire
- effectuer (812) au moins une mesure du signal quantique interférométrique transcodé $|\Psi_B\rangle$.

**Patentansprüche**

1. Emitter, konfiguriert zum Übertragen eines codierten interferometrischen Signals $S_2$ durch einen Übertragungskanal (50), wobei der Emitter Folgendes umfasst:

- ein Modul zur Signalerzeugung (100), konfiguriert zum Erzeugen eines intermediären Quantensignals $|\Psi_1\rangle$ und eines intermediären Steuersignals $S_c$, wobei das Modul zur Signalerzeugung (100) weiter konfiguriert ist zum Durchführen einer Frequenzverschiebung $\Delta\omega$ zwischen dem intermediären Quantensignal $|\Psi_1\rangle$ und dem intermediären Steuersignal $S_c$,
- ein interferometrisches Codierungsmodul (200), konfiguriert zum Empfangen des intermediären Quantensignals $|\Psi_1\rangle$ und des intermediären Steuersignals $S_c$ und, ausgehend von dem intermediären Quantensignal $|\Psi_1\rangle$ und dem intermediären Steuersignal $S_c$, die einen im Wesentlichen ähnlichen optischen Pfad durchlaufen, zum Bestimmen eines codierten $|\Psi_A\rangle$ interferometrischen Signals $S_2$, das ein codiertes interferometrisches Quantensignal und ein interferometrisches Steuersignal $S_{cA}$ umfasst, wobei das interferometrische Codierungsmodul (200) eine Codierungsvorrichtung (240D) umfasst, konfiguriert zum Anwenden einer Phasenmodulation $\alpha$ einzig auf eine Komponente des intermediären Quantensignals $|\Psi_1\rangle$.

2. Emitter nach dem vorstehenden Anspruch, wobei das interferometrische Codierungsmodul (200) in Form eines asymmetrischen optischen Interferometers implementiert wird, das einen ersten interferometrischem Arm (240-1) und einen zweiten interferometrischen Arm (240-2) umfasst, wobei der erste interferometrische Arm (240-1) kürzer als der zweite interferometrische Arm (240-2) ist und wobei die Codierungsvorrichtung (240D) mindestens eine Frequenztrennungseinheit (244) umfasst, die an dem zweiten interferometrischen Arm (240-2) positioniert ist, wobei die Frequenztrennungseinheit (244) konfiguriert ist zum Durchführen einer Frequenzentkopplung des intermediären Quantensignals $|\Psi_1\rangle$ und des intermediären Steuersignals $S_c$.

3. Emitter nach einem der Ansprüche 1 oder 2, wobei das Signalerzeugungsmodul (100) weiter eine Zeitverschiebungseinheit umfasst, konfiguriert zum zeitlichen Verschieben des intermediären Quantensignals $|\Psi_1\rangle$ und des intermediären Steuersignals $S_c$.

4. Empfänger, konfiguriert zum Empfangen eines codierten interferometrischen Quantensignals $|\Psi_A\rangle$ und eines interferometrischen Steuersignals $S_{cA}$ durch einen Übertragungskanal (50), wobei der Empfänger Folgendes umfasst:

- ein interferometrisches Transcodierungsmodul (300), konfiguriert zum Erzeugen eines transcodierten interferometrischen Quantensignal $|\Psi_B\rangle$ und eines phasenmodulierten interferometrischen Steuersignals $S_{cB}$ ausgehend von dem codierten interferometrischen Quantensignal $|\Psi_A\rangle$ und dem interferometrischen Steuersignal $S_{cA}$, die einen im Wesentlichen ähnlichen optischen Pfad durchlaufen, wobei das interferometrische Transcodierungsmodul (300) eine Transcodierungs- und Phasenmodulationsvorrichtung (340D) umfasst, die konfiguriert ist zum Anwenden einer Phasenmodulation $\beta_{eff}$ einzig auf eine Komponente des codierten interferometrischen Quantensignals $|\Psi_A\rangle$ und einer Phasenmodulation $\varphi_m$ einzig auf eine Komponente des interferometrischen Steuersignals $S_{cA}$,
- ein Verarbeitungsmodul (400), konfiguriert zum Durchführen mindestens einer Messung des transcodierten

interferometrischen Quantensignals $|\Psi_B\rangle$ und mindestens einer Messung des phasenmodulierten interferometrischen Steuersignals $S_{cB}$, wobei das Verarbeitungsmodul (400) weiter konfiguriert ist zum Bestimmen der Phasenmodulation $\beta_{eff}$ ausgehend von der Phasenmodulation $\varphi_m$ und der mindestens einen Messung des phasenmodulierten interferometrischen Steuersignals $S_{cB}$.

5. Empfänger nach Anspruch 4, wobei das interferometrische Transcodierungsmodul (300) in Form eines asymmetrischen optischen Interferometers implementiert ist, das einen ersten interferometrischem Arm (340-1) und einen zweiten interferometrischen Arm (340-2) umfasst, wobei der erste interferometrische Arm (340-1) kürzer als der zweite interferometrische Arm (340-2) ist und wobei die Transcodierungs- und Phasenmodulationsvorrichtung (340D) mindestens eine Frequenztrennungseinheit (344) umfasst, die an dem zweiten interferometrischen Arm (340-2) positioniert ist, wobei die Frequenztrennungseinheit (344) konfiguriert ist zum Durchführen einer Frequenzentkopplung des codierten interferometrischen Quantensignals $|\Psi_A\rangle$ und des interferometrischen Steuersignals $S_{cA}$.

6. Empfänger nach einem der Ansprüche 4 oder 5, wobei das interferometrische Transcodierungsmodul (300) am Ausgang des Interferometers zwei optische Pfade (340 - 3, 340-4) umfasst und wobei das Verarbeitungsmodul (400) zwei Verarbeitungsabschnitte (420,440) umfasst, wobei jeder Verarbeitungsabschnitt jeweils eine Frequenztrennungseinheit (422,442) umfasst und konfiguriert ist zum Durchführen einer Messung unter der mindestens einen Messung des transcodierten interferometrischen Quantensignals $|\Psi_B\rangle$ und einer Messung unter der mindestens einen Messung des phasenmodulierten interferometrischen Steuersignals $S_{cB}$, die aus den zwei optischen Pfaden (340-3 und 340-4) stammen.

7. System zur Bestimmung eines Quantenverschlüsselungsschlüssels (1), umfassend einen nach einem der Ansprüche 1 bis 3 definierten Emitter und einen nach einem der Ansprüche 4 bis 6 definierten Empfänger.

8. Verfahren zur Emission eines codierten interferometrischen Signals $S_2$, ausgeführt durch den Emitter nach einem der Ansprüche 1 bis 3, wobei das Verfahren die Schritte umfasst bestehend aus:

   - Erzeugen (700) eines intermediären Quantensignals $|\Psi_1\rangle$ von Frequenz $\omega_q$ und eines intermediären Steuersignals $S_c$ von Frequenz $\omega_c$ mit einer Frequenzverschiebung gleich $\omega_q - \omega_c$
   - Anwenden (704) einer Phasenmodulation $\alpha$ einzig auf eine Komponente des intermediären Quantensignals $|\Psi_1\rangle$, das durch ein Interferometer hindurchgeht, wobei das intermediäre Quantensignal $|\Psi_1\rangle$ und das intermediäre Steuersignal $S_c$ einen im Wesentlichen ähnlichen optischen Pfad durchlaufen, zum Erzeugen eines codierten interferometrischen Signals $S_2$, umfassend ein codiertes interferometrischen Quantensignal $|\Psi_A\rangle$ und ein interferometrisches Steuersignal $S_{cA}$,
   - Erzeugen (706) eines codierten interferometrischen Signals $S_2$, umfassend das codierte interferometrische Quantensignal $|\Psi_A\rangle$ und das interferometrische Steuersignal $S_{cA}$.

9. Verfahren zur Emission eines codierten interferometrischen Signals $S_2$ nach Anspruch 8, wobei das Verfahren weiter einen Schritt umfasst bestehend aus dem Anwenden (701) einer Zeitverzögerung zwischen dem intermediären Quantensignal $|\Psi_1\rangle$ und dem intermediären Steuersignal $S_c$.

10. Verfahren zum Empfang eines codierten interferometrischen Quantensignals $|\Psi_A\rangle$ und eines interferometrischen Steuersignals $S_{cA}$, ausgeführt durch den Empfänger nach Ansprüchen 4 bis 6, wobei das Verfahren die Schritte umfasst bestehend aus:

   - Anwenden (802) einer Phasenmodulation $\varphi_m$ auf die Komponente des interferometrischen Steuersignals $S_{cA}$ und Erzeugen eines phasenmodulierten interferometrischen Steuersignals $S_{cB}$,
   - Durchführen (804) mindestens einer Messung des phasenmodulierten interferometrischen Steuersignal $S_{cB}$,
   - Bestimmen (808) einer Phasenmodulation $\beta_{eff}$ ausgehend von der Phasenmodulation $\varphi_m$ und der Messung des phasenmodulierten interferometrischen Steuersignals $S_{cB}$,
   - Anwenden (810) der Phasenmodulation $\beta_{eff}$ auf die Komponente des codierten interferometrischen Quantensignals $|\Psi_A\rangle$ und Erzeugen eines transcodierten interferometrischen Quantensignals $|\Psi_B\rangle$, wobei das codierte interferometrische Quantensignal $|\Psi_A\rangle$ und das interferometrische Steuersignal $S_{cA}$ einen im Wesentlichen ähnlichen optischen Pfad durchlaufen
   - Durchführen (812) mindestens einer Messung des transcodierten interferometrischen Quantensignals $|\Psi_B\rangle$.

**Claims**

1. Emitter configured to transmit an encoded interferometric signal $S_2$ through a transmission channel (50), where said emitter comprises:

   - a signal generating module (100) configured to generate an intermediate quantum signal $|\Psi_1\rangle$ and an intermediate control signal $S_c$, said signal generating module (100) being further configured to bring about a frequency offset $\Delta\omega$ between the intermediate quantum signal $|\Psi_1\rangle$ and the intermediate control signal $S_c$,
   - an encoding interferometric module (200) configured to receive said intermediate quantum signal $|\Psi_1\rangle$ and said intermediate control signal $S_c$, and to determine an encoded interferometric signal $S_2$ comprising an encoded interferometric quantum signal $|\Psi_A\rangle$ and an interferometric control signal $S_{cA}$ from said intermediate quantum signal $|\Psi_1\rangle$ and from said intermediate control signal $S_c$ travelling along a substantially similar optical path, said encoding interferometric module (200) comprising an encoding device (240D) configured to phase-modulate $\alpha$ only one component of the intermediate quantum signal $|\Psi_1\rangle$.

2. Emitter, according to the preceding claim, wherein the encoding interferometric module (200) is implemented in the form of an asymmetric optical interferometer comprising a first interferometric arm (240-1) and a second interferometric arm (240-2), the first interferometric arm (240-1) being shorter than the second interferometric arm (240-2), and wherein said encoding device (240D) comprises at least one frequency separation unit (244) positioned on said second interferometric arm (240-2), said frequency separation unit (244) being configured to bring about a frequency decoupling of the intermediate quantum signal $|\Psi_1\rangle$ and of the intermediate control signal $S_c$.

3. Emitter, according to any one of claims 1 or 2, wherein the signal generating module (100) further comprises a time offset unit configured to temporally offset the intermediate quantum signal $|\Psi_1\rangle$ and the intermediate control signal $S_c$.

4. Receiver configured to receive an encoded interferometric quantum signal $|\Psi_A\rangle$ and an interferometric control signal $S_{cA}$ through a transmission channel (50), where said receiver comprises:

   - a transcoding interferometric module (300) configured to generate a transcoded interferometric quantum signal $|\Psi_B\rangle$ and a phase-modulated interferometric control signal $S_{cB}$ from said encoded interferometric quantum signal $|\Psi_A\rangle$ and from said interferometric control signal $S_{cA}$ travelling along a substantially similar optical path, said transcoding interferometric module (300) comprising a transcoding and phase-modulation device (340D) being configured to phase-modulate $\beta_{eff}$ only to a component of the encoded interferometric quantum signal $|\Psi_A\rangle$ and a phase modulation $\varphi_m$ only at one component of the interferometric control signal $S_{cA}$,
   - a processing module (400) configured to bring about at least one measurement of the transcoded interferometric quantum signal $|\Psi_B\rangle$ and at least one measurement of the phase-modulated interferometric control signal $S_{cB}$, said processing module (400) being further configured to determine the phase modulation $\beta_{eff}$ from the phase modulation $\varphi_m$ and from said at least one measurement of the phase-modulated interferometric control signal $S_{cB}$.

5. Receiver, according to claim 4, wherein the transcoding interferometric module (300) is implemented in the form of an asymmetric optical interferometer comprising a first interferometric arm (340-1) and a second interferometric arm (340-2), the first interferometric arm (340-1) being shorter than the second interferometric arm (340-2), and wherein said transcoding and phase-modulation device (340D) comprises at least one frequency separation unit (344) positioned on said second interferometric arm (340-2), said frequency separation unit (344) being configured to bring about a frequency decoupling of the encoded interferometric quantum signal $|\Psi_A\rangle$ and of the intermediate control signal $S_{cA}$.

6. Receiver, according to any one of claims 4 or 5, wherein the transcoding interferometric module (300) comprises two optical paths (340 - 3, 340-4) at the outlet of said interferometer, and wherein the processing module (400) comprises two processing parts (420,440), each processing part each comprising a frequency separation unit (422,442) and being configured to bring about a measurement from among said at least one measurement of the transcoded interferometric quantum signal $|\Psi_B\rangle$ and a measurement from among said at least one measurement of the phase-modulated interferometric control signal $S_{cB}$, coming from the two optical paths (340-3 and 340-4)

7. System for determining a quantum encryption key (1) comprising an emitter defined according to any one of claims 1 to 3, and a receiver defined according to any one of claims 4 to 6.

8. Method for emitting an encoded interferometric signal $S_2$, implemented by the emitter according to claims 1 to 3, the method comprising the steps consisting of:

- generating (700) a frequency intermediate quantum signal $|\Psi_1\rangle \, \omega_q$ and a frequency intermediate control signal $S_c \, \omega_c$ having a frequency offset equal to $\omega_q - \omega_c$
- phase-modulating (704) $\alpha$ only a component of the intermediate quantum signal $|\Psi_1\rangle$ passing through an interferometer, said intermediate quantum signal $|\Psi_1\rangle$ and said intermediate control signal $S_c$ travelling along a substantially similar optical path to generate an encoded interferometric signal $S_2$ comprising an encoded interferometric quantum signal $|\Psi_A\rangle$ and an interferometric control signal $S_{cA}$,
- generating (706) an encoded interferometric signal $S_2$ comprising said encoded interferometric quantum signal $|\Psi_A\rangle$ and said interferometric control signal $S_{cA}$.

9. Method for emitting an encoded interferometric signal $S_2$, according to claim 8, wherein the method further comprises a step consisting of applying (701) a time delay between said intermediate quantum signal $|\Psi_1\rangle$ and said intermediate control signal $S_c$.

10. Method for receiving an encoded interferometric quantum signal $|\Psi_A\rangle$ and an interferometric control signal $S_{cA}$, implemented by the receiver according to claims 4 to 6, the method comprising the steps consisting of:

- phase-modulating (802) $\varphi_m$ the component of the interferometric control signal $S_{cA}$ and generating a phase-modulated interferometric control signal $S_{cB}$,
- bringing about (804) at least one measurement of the phase-modulated interferometric control signal $S_{cB}$,
- determining (808) a phase modulation $\beta_{eff}$ from said phase modulation $\varphi_m$ and from the measurement of the phase-modulated interferometric control signal $S_{CB}$,
- phase-modulating (810) $\beta_{eff}$ the component of the encoded interferometric quantum signal $|\Psi_A\rangle$ and generating a transcoded interferometric quantum signal $|\Psi_B\rangle$, said encoded interferometric quantum signal $|\Psi_A\rangle$ and said interferometric control signal $S_{cA}$ travelling along a substantially similar optical path
- bringing about (812) at least one measurement of the transcoded interferometric quantum signal $|\Psi_B\rangle$.

**FIG. 1**

**FIG. 2**

**FIG. 3**

**FIG. 4**

**FIG. 5**

**FIG. 6**

## Émetteur Alice

| | |
|---|---|
| Générer le signal intermédiaire $S_1$ comprenant le signal quantique $|\Psi_1\rangle$ et le signal de contrôle $S_c$ séparés fréquentiellement par le décalage $\Delta\omega$ | **700** |
| Faire passer le signal quantique $|\Psi_1\rangle$ et le signal de contrôle $S_c$ dans un interféromètre | **702** |
| Appliquer la modulation de phase $\alpha$ à une des composantes interférométrique du signal quantique $|\Psi_1\rangle$ | **704** |
| Générer le signal interférométrique encodé $S_2$ comprenant le signal quantique interférométrique encodé $|\Psi_A\rangle$ (modulé en phase) et le signal de contrôle interférométrique $S_{cA}$ (modulé en fréquence) | **706** |
| Transmettre le signal interférométrique encodé $S_2$ au Récepteur Bob | **708** |

**FIG. 7**

## Récepteur Bob

Faire passer le signal interférométrique encodé $|\Psi_A\rangle$ et le signal de contrôle interférométrique $S_{cA}$ dans l'interféromètre du récepteur Bob 〜 **800**

$\downarrow$

Appliquer la modulation de phase $\varphi_m$ à une des composantes du signal de contrôle interférométrique $S_{cA}$ et générer le signal de contrôle interférométrique modulé en phase $S_{cB}$ 〜 **802**

$\downarrow$

Mesurer le signal de contrôle interférométrique modulé en phase $S_{cB}$ 〜 **804**

$\downarrow$

Déterminer la correction différentielle $\varepsilon$ des fluctuations de phase entre les décalages de phase $\varphi_A$ et $\varphi_B$, à partir de la modulation de phase $\varphi_m$ et de la mesure interférométrique du signal $S_{cB}$ 〜 **806**

$\downarrow$

Déterminer la modulation de phase $\beta_{eff}$, à partir du signal d'erreur discret $\varepsilon$ et de la modulation de phase $\beta$ 〜 **808**

$\downarrow$

Appliquer la modulation de phase $\beta_{eff}$ à une des composantes du signal quantique interférométrique encodé $|\Psi_A\rangle$ et générer le signal quantique interférométrique transcodé $|\Psi_B\rangle$ 〜 **810**

$\downarrow$

Mesurer le signal quantique interférométrique transcodé $|\Psi_B\rangle$ 〜 **812**

## FIG. 8

**EP 4 533 696 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1499040 A2

- GB 2430124 A

**Littérature non-brevet citée dans la description**

- **G. VALLONE et al.** Interference at the Single Photon Level Along Satellite-Ground Channels. *Phys. Rev. Lett.*, 2016, vol. 116, 253601
- **DIXON et al.** *Optics Express*, 2008, vol. 16 (23), 18790-18797

- **Z. YUAN et al.** 10-Mb/s Quantum Key Distribution. *Journal of Lightwave Technology*, 2018, vol. 36, 16
- **C. BENNETT** ; **G. BRASSARD**. Quantum cryptography: Public key distribution and coin tossing. *Theoretical Computer Science*, 1884, vol. 560, 7-11